# EUROPEAN PATENT APPLICATION

(11) **EP 4 072 234 A1**
(43) Date of publication of application: **12.10.2022**
(21) Application number: 20908647.9
(22) Date of filing: 26.08.2020
(51) Int. Cl.: H04W 76/10

(54) **METHOD FOR ESTABLISHING CONNECTION AND OBTAINING RELAY SERVICE CODE, AND COMMUNICATION APPARATUS**

(30) Priority: 30.12.2019 CN 201911391368
(71) Applicant: Huawei Technologies Co., Ltd., Longgang Shenzhen, Guangdong 518129 (CN)
(72) Inventor: DING, Hui, Shenzhen, Guangdong 518129 (CN); ZHANG, Di, Shenzhen, Guangdong 518129 (CN)
(74) Representative: Gill Jennings & Every LLP
(86) International application number: PCT/CN2020/111204
(87) International publication number: WO 2021/135295

(57) **Abstract**

This application provides a method for establishing a connection and obtaining a relay service code. The method includes: A first terminal device sends a first broadcast message, where the first broadcast message includes a first relay service code, the first relay service code includes information about a first parameter, the first parameter is a parameter for accessing a first application, and the first application is an application to be initiated by the first terminal device. The first terminal device receives a response message from a second terminal device, where the response message indicates that the second terminal device supports accessing the first application by using the first parameter. The second terminal device that matches the first terminal device based on the first relay service code may provide a relay service required by the first terminal device.

## Description

This application claims priority to Chinese Patent Application No. 201911391368.4, filed with the China National Intellectual Property Administration on December 30, 2019 and entitled "METHOD FOR ESTABLISHING CONNECTION AND OBTAINING RELAY SERVICE CODE AND COMMUNICATIONS APPARATUS", which is incorporated herein by reference in its entirety.

### TECHNICAL FIELD

This application relates to the wireless communications field, and more specifically, to a method for establishing a connection and obtaining a relay service code and a communications apparatus.

### BACKGROUND

In a proximity-based services relay solution defined in a 4th generation (4th generation, 4G) system, remote user equipment (user equipment, UE) establishes a PC5 connection to relay UE by using a preconfigured relay service code (relay service code). After the remote UE establishes the PC5 connection to the relay UE, when the remote UE initiates a service or an application by using the relay UE, the relay UE establishes a protocol data unit (protocol data unit, PDU) session for the service or the application according to a UE route selection policy (UE routing selection policy, URSP) rule received by the relay UE. In this case, a session parameter selected based on the service or the application is a session parameter configured by a carrier for the relay UE. The remote UE may subscribe to a corresponding value-added service or a value-added package. In this case, the carrier may configure a session parameter with a higher priority for the remote UE. Therefore, when the remote UE finds the relay UE based on the currently preconfigured relay service code, service assurance required by the remote UE possibly cannot be provided.

### SUMMARY

This application provides a method for establishing a connection and obtaining a relay service code. According to the method provided in this application, relay UE that matches remote UE can provide service assurance required by the remote UE.

According to a first aspect, a connection establishment method is provided. The method includes: A first terminal device sends a first broadcast message, where the first broadcast message includes a first relay service code, the first relay service code includes information about a first parameter, the first parameter is a parameter for accessing a first application, and the first application is an application to be initiated by the first terminal device. The first terminal device receives a response message from a second terminal device, where the response message indicates that the second terminal device supports accessing the first application by using the first parameter.

Based on the foregoing technical solution, a first relay service code included in a first broadcast message sent by remote UE may include information about a first parameter. Therefore, relay UE that matches the remote UE based on the first broadcast message supports accessing, by using a session parameter required by the remote UE, an application to be initiated by the remote UE, that is, the relay UE can provide service assurance required by the remote UE.

With reference to the first aspect, in some implementations of the first aspect, the first parameter includes one or more of the following parameters: a data network name (data network name, DNN), single-network slice selection assistance information (single-network slice selection assistance information, S-NSSAI), a session and service continuity (session and service continuity, SSC) mode, a PDU session type, an access mode priority, and a non-3rd Generation Partnership Project (3rd Generation Partnership Project, 3GPP) offloading indication.

With reference to the first aspect, in some implementations of the first aspect, the first relay service code is associated with the first application.

With reference to the first aspect, in some implementations of the first aspect, the first relay service code is associated with a second application, and the second application is an application of a relay service that is supported by the second terminal device.

With reference to the first aspect, in some implementations of the first aspect, the method further includes: The first terminal device sends a first request message to a first policy control function (policy control function, PCF) network element by using an access and mobility management function (access and mobility management function, AMF) network element, where the first request message requests to obtain the first relay service code. The first terminal device receives the first relay service code from the first PCF network element.

With reference to the first aspect, in some implementations of the first aspect, the first request message includes the following information: identification information of the first terminal device, a request type, and an identifier of the application.

With reference to the first aspect, in some implementations of the first aspect, the first request message further includes downgrade indication information, and the downgrade indication information indicates whether the first terminal device accepts service downgrade.

According to a second aspect, a connection establishment method is provided. The method includes: A second terminal device receives a first broadcast message, where the first broadcast message includes a first relay service code, the first relay service code includes information about a first parameter, the first parameter is a parameter for accessing a first application, and the first application is an application to be initiated by a first terminal device. The second terminal device sends a response message to the first terminal, where the response message indicates that the second terminal device supports accessing the first application by using the first parameter.

Based on the foregoing technical solution, a first relay service code included in a first broadcast message sent by remote UE may include information about a first parameter. Therefore, relay UE that matches the remote UE based on the first broadcast message supports accessing, by using a session parameter required by the remote UE, an application to be initiated by the remote UE, that is, the relay UE can provide service assurance required by the remote UE.

With reference to the second aspect, in some implementations of the second aspect, the first parameter includes one or more of the following parameters: a DNN, S-NASSI, an SSC mode, a PDU session type, an access mode priority, and a non-3GPP offloading indication.

With reference to the second aspect, in some implementations of the second aspect, before the second terminal device sends the response message to the first terminal device, the method further includes: The second terminal device determines whether the second terminal device supports the first application by using the first parameter.

With reference to the second aspect, in some implementations of the second aspect, the first relay service code is associated with the first application. The method further includes: The second terminal device determines, based on whether the first relay service code is the same as or equivalent to a second relay service code, whether the second terminal device supports the first application by using the first parameter, where the second relay service code is associated with the first application or a second application, the second application is an application of a relay service that is supported by the second terminal device, and the second relay service code is a relay service code stored in the second terminal device.

With reference to the second aspect, in some implementations of the second aspect, the first relay service code is associated with a second application, and the second application is an application of a relay service that is supported by the second terminal device. The method further includes: The second terminal device determines, based on whether the first relay service code is the same as or equivalent to a second relay service code, whether the second terminal device supports the first application by using the first parameter, where the second relay service code is associated with the second application, and the second relay service code is a relay service code stored in the second terminal device.

According to a third aspect, a method for obtaining a relay service code is provided. The method includes: A first PCF network element receives a first request message from a first terminal device, where the first request message requests to obtain a first relay service code, the first relay service code includes information about a first parameter, the first parameter is a parameter for accessing a first application, and the first application is an application to be initiated by the first terminal device. The first PCF network element determines the first relay service code based on the first parameter. The first PCF network element sends the first relay service code to the first terminal device via an AMF network element.

Based on the foregoing technical solution, the first PCF may assign a first relay service code that includes information about a first parameter to remote UE based on a request of the remote UE. Further, relay UE that matches the remote UE based on the first relay service code may provide a relay service required by the remote UE.

With reference to the third aspect, in some implementations of the third aspect, the first parameter includes one or more of the following parameters: a DNN, S-NASSI, an SSC mode, a PDU session type, an access mode priority, and a non-3GPP offloading indication.

With reference to the third aspect, in some implementations of the third aspect, the first relay service code is associated with the first application. That the first PCF network element determines the first relay service code based on the first parameter includes: The first PCF network element determines the first relay service code based on the first parameter and the following information: subscription information of the first terminal device and an identifier of the first application.

With reference to the third aspect, in some implementations of the third aspect, the first relay service code is associated with the first application. That the first PCF network element determines the relay service code based on the first parameter includes: The first PCF network element determines the first relay service code based on the first parameter and the following information: subscription information of the first terminal device, an identifier of the first application, and downgrade indication information, where the downgrade indication information indicates whether the first terminal device accepts service downgrade.

With reference to the third aspect, in some implementations of the third aspect, the first relay service code is associated with a second application, and the second application is an application of the terminal device that supports a relay service. That the first PCF network element determines the first relay service code based on the first parameter includes: The first PCF network element sends a second request message to a second PCF network element, where the second request message requests to obtain a second relay service code, the second relay service code is associated with the second application, and the second request message includes the first parameter and an identifier of the first application. The first PCF network element receives the second relay service code from the second PCF network element. The first PCF network element determines the first relay service code based on the second relay service code.

Based on the foregoing technical solution, the first PCF may assign the first relay service code associated with the relay UE to the remote UE, and the relay UE corresponding to the first relay service code may provide the relay service required by the remote UE. Therefore, the relay UE that matches the remote UE based on the first relay service code can meet a requirement of the remote UE.

With reference to the third aspect, in some implementations of the third aspect, the method further includes: The first PCF network element sends a third request message to a unified data repository (unified data repository, UDR) network element, where the third request message requests to obtain information about the second PCF. The first PCF network element receives the information about the second PCF from the UDR network element.

With reference to the third aspect, in some implementations of the third aspect, the first request message includes the following information: identification information of the first terminal device, a request type, and the identifier of the first application.

With reference to the third aspect, in some implementations of the third aspect, the first request message further includes downgrade indication information, and the downgrade indication information indicates whether the first terminal device accepts service downgrade.

According to a fourth aspect, a connection establishment method is provided. The method includes: A first terminal device sends a first broadcast message, where the first broadcast message includes a third relay service code and a first parameter, the first parameter is a parameter for accessing a first application, and the first application is an application to be initiated by the first terminal device. The first terminal device receives a response message from a second terminal device, where the response message indicates that the second terminal device supports accessing the first application by using the first parameter.

Based on the foregoing technical solution, a first broadcast message sent by remote UE may include information about a first parameter. Therefore, relay UE that matches the remote UE based on the first broadcast message supports accessing, by using a session parameter required by the remote UE, an application to be initiated by the remote UE, that is, the relay UE can provide service assurance required by the remote UE.

With reference to the fourth aspect, in some implementations of the fourth aspect, the first parameter includes one or more of the following parameters: a DNN, S-NASSI, an SSC mode, and a PDU session type.

According to a fifth aspect, a connection establishment method is provided. The method includes: A second terminal device sends a second broadcast message, where the second broadcast message includes a second relay service code, the second relay service code includes information about a second parameter, the second parameter is a parameter for accessing a second application, and the second application is an application of a relay service that is supported by the second terminal device. The second terminal device receives a fourth request message from a first terminal device, where the fourth request message requests to establish a PC5 connection to the second terminal device.

Based on the foregoing technical solution, a second relay service code included in a second broadcast message sent by relay UE may include information about a second parameter. Therefore, the relay UE supports accessing, by using a session parameter required by remote UE that matches the relay UE based on the second broadcast message, an application to be initiated by the remote UE, that is, the relay UE can provide service assurance required by the remote UE.

With reference to the fifth aspect, in some implementations of the fifth aspect, the second parameter includes one or more of the following parameters: a DNN, S-NASSI, an SSC mode, a PDU session type, an access mode priority, and a non-3GPP offloading indication.

With reference to the fifth aspect, in some implementations of the fifth aspect, the second relay service code is associated with the second application.

With reference to the fifth aspect, in some implementations of the fifth aspect, the second relay service code is associated with a first application, and the first application is an application to be initiated by the first terminal device.

With reference to the fifth aspect, in some implementations of the fifth aspect, the method further includes: The second terminal device sends a fifth request message to a second PCF network element via an AMF network element, where the fifth request message requests to obtain the second relay service code. The second terminal device receives the second relay service code from the second PCF network element.

With reference to the fifth aspect, in some implementations of the fifth aspect, the fifth request message includes the following information: identification information of the second terminal device, a request type, and an identifier of the second application.

According to a sixth aspect, a connection establishment method is provided. The method includes: A first terminal device receives a second broadcast message, where the second broadcast message includes a second relay service code, the second relay service code includes information about a second parameter, the second parameter is a parameter for accessing a second application, and the second application is an application of a second terminal device that supports a relay service. The first terminal device sends a fourth request message to the second terminal device, where the fourth request message requests to establish a PC5 connection to the second terminal device.

Based on the foregoing technical solution, a second relay service code included in a second broadcast message sent by relay UE may include information about a second parameter. Therefore, the relay UE supports accessing, by using a session parameter required by remote UE that matches the relay UE based on the second broadcast message, an application to be initiated by the remote UE, that is, the relay UE can provide service assurance required by the remote UE.

With reference to the sixth aspect, in some implementations of the sixth aspect, the second parameter includes one or more of the following parameters: a DNN, S-NASSI, an SSC mode, a PDU session type, an access mode priority, and a non-3GPP offloading indication.

With reference to the sixth aspect, in some implementations of the sixth aspect, before the second terminal device sends the fourth request message to the first terminal device, the method further includes: The first terminal device determines whether the second terminal device supports accessing a first application by using a first parameter, where the first application is an application to be initiated by the first terminal device, and the first parameter is a parameter for accessing the first application.

With reference to the sixth aspect, in some implementations of the sixth aspect, the second relay service code is associated with the second application. The method further includes: The first terminal device determines, based on whether the second relay service code is the same as or equivalent to a first relay service code, whether the second terminal device supports accessing the second application by using a first parameter, where the first relay service code is a relay service code stored in the first terminal device, the first relay service code is associated with the second application or a first application, the first application is an application to be initiated by the first terminal device, and the first parameter is a parameter for accessing the first application.

With reference to the sixth aspect, in some implementations of the sixth aspect, the second relay service code is associated with a first application, and the first application is an application to be initiated by the first terminal device. The method further includes: The first terminal device determines, based on whether the second relay service code is the same as or equivalent to a first relay service code, whether the second terminal device supports accessing the first application by using a first parameter, where the first relay service code is a relay service code stored in the first terminal device, the second relay service code is associated with the first application, and the first parameter is a parameter for accessing the first application.

With reference to the sixth aspect, in some implementations of the sixth aspect, the first parameter includes one or more of the following parameters: a DNN, S-NASSI, an SSC mode, a PDU session type, an access mode priority, and a non-3GPP offloading indication.

According to a seventh aspect, a method for obtaining a relay service code is provided. The method includes: A second PCF network element receives a fifth request message from a second terminal device, where the fifth request message requests to obtain a second relay service code, the second relay service code includes information about a second parameter, the second parameter is a parameter for accessing a second application, and the second application is an application of a relay service that is supported by the second terminal device. The second PCF network element determines the second relay service code based on the second parameter. The second PCF network element sends the second relay service code to the second terminal device via an AMF network element.

Based on the foregoing technical solution, the second PCF may assign a second relay service code that includes information about a second parameter to relay UE based on a request of the relay UE. Further, the relay UE may provide a relay service required by remote UE that matches the relay UE based on the first relay service code.

With reference to the seventh aspect, in some implementations of the seventh aspect, the second parameter includes one or more of the following parameters: a DNN, S-NASSI, an SSC mode, a PDU session type, an access mode priority, and a non-3GPP offloading indication.

With reference to the seventh aspect, in some implementations of the seventh aspect, the second relay service code is associated with the second application. That the second PCF network element determines the second relay service code based on the second parameter includes: The second PCF network element determines the second relay service code based on the second parameter and the following information: subscription information of the second terminal device and an identifier of the second application.

With reference to the seventh aspect, in some implementations of the seventh aspect, the second relay service code is associated with the second application. That the second PCF network element determines the second relay service code based on the second parameter includes: The second PCF network element determines the second relay service code based on the second parameter and the following information: subscription information of the second terminal device and an identifier of the second application.

With reference to the seventh aspect, in some implementations of the seventh aspect, the second relay service code is associated with a first application, and the first application is an application to be initiated by a first terminal device. That the second PCF network element determines the second relay service code based on the second parameter includes: The second PCF network element sends a sixth request message to a first PCF network element, where the sixth request message requests to obtain a first relay service code, the first relay service code is associated with the first application, and the sixth request message includes the second parameter and an identifier of the second application. The second PCF network element receives the first relay service code from the first PCF network element. The second PCF network element determines the second relay service code based on the first relay service code.

Based on the foregoing technical solution, the second PCF may assign the second relay service code associated with the remote UE to the relay UE, and the relay UE may provide the remote UE with a relay service required by the remote UE corresponding to the second relay service code.

With reference to the seventh aspect, in some implementations of the seventh aspect, the method further includes:
The second PCF network element sends a seventh request message to a UDR network element, where the seventh request message requests to obtain information about the first PCF. The second PCF network element receives the information about the first PCF from the UDR network element.

With reference to the seventh aspect, in some implementations of the seventh aspect, the fifth request message includes the following information: identification information of the second terminal device, a request type, and the identifier of the second application.

According to an eighth aspect, a connection establishment method is provided. The method includes:
A second terminal device sends a second broadcast message, where the second broadcast message includes a second relay service code and a second parameter, the second parameter is a parameter for accessing a second application, and the second application is an application of a relay service that is supported by the second terminal device. The second terminal device receives a request message from a first terminal device, where the request message requests to establish a PC5 connection to the second terminal device.

Based on the foregoing technical solution, a second broadcast message sent by relay UE may include information about a second parameter. Therefore, the relay UE supports accessing, by using a session parameter required by remote UE that matches the relay UE based on the second broadcast message, an application to be initiated by the remote UE, that is, the relay UE can provide service assurance required by the remote UE.

With reference to the eighth aspect, in some implementations of the eighth aspect, the second parameter includes one or more of the following parameters: a DNN, S-NASSI, an SSC mode, a PDU session type, an access mode priority, and a non-3GPP offloading indication.

According to a ninth aspect, a communications apparatus is provided. The communications apparatus includes a transceiver unit. The transceiver unit is configured to send a first broadcast message, where the first broadcast message includes a first relay service code, the first relay service code includes information about a first parameter, the first parameter is a parameter for accessing a first application, and the first application is an application to be initiated by the communications apparatus. The transceiver unit is further configured to receive a response message from a second terminal device, where the response message indicates that the second terminal device supports accessing the first application by using the first parameter.

With reference to the ninth aspect, in some implementations of the ninth aspect, the first parameter includes one or more of the following parameters: a DNN, S-NSSAI, an SSC mode, a PDU session type, an access mode priority, and a non-3GPP offloading indication.

With reference to the ninth aspect, in some implementations of the ninth aspect, the first relay service code is associated with the first application.

With reference to the ninth aspect, in some implementations of the ninth aspect, the first relay service code is associated with a second application, and the second application is an application of a relay service that is supported by the second terminal device.

With reference to the ninth aspect, in some implementations of the ninth aspect, the transceiver unit is further configured to: send a first request message to a first PCF network element via an AMF network element, where the first request message requests to obtain the first relay service code; and receive the first relay service code from the first PCF network element.

With reference to the ninth aspect, in some implementations of the ninth aspect, the first request message includes the following information: identification information of the communications apparatus, a request type, and an identifier of the first application.

With reference to the ninth aspect, in some implementations of the ninth aspect, the first request message further includes downgrade indication information, and the downgrade indication information indicates whether the communications apparatus accepts service downgrade.

According to a tenth aspect, a communications apparatus is provided. The communications apparatus includes a transceiver unit and a processing unit. The transceiver unit is configured to receive a first broadcast message, where the first broadcast message includes a first relay service code, the first relay service code includes information about a first parameter, the first parameter is a parameter for accessing a first application, and the first application is an application to be initiated by a first terminal device. The transceiver unit is further configured to send a response message to the first terminal, where the response message indicates that the communications apparatus supports accessing the first application by using the first parameter.

With reference to the tenth aspect, in some implementations of the tenth aspect, the first parameter includes one or more of the following parameters: a DNN, S-NASSI, an SSC mode, a PDU session type, an access mode priority, and a non-3GPP offloading indication.

With reference to the tenth aspect, in some implementations of the tenth aspect, the processing unit is configured to determine whether the second terminal device supports the first application by using the first parameter.

With reference to the tenth aspect, in some implementations of the tenth aspect, the first relay service code is associated with the first application. The processing unit is further configured to determine, based on whether the first relay service code is the same as or equivalent to a second relay service code, whether the second terminal device supports the first application by using the first parameter, where the second relay service code is associated with the first application or a second application, the second application is an application of the communications apparatus that supports a relay service, and the second relay service code is a relay service code stored in the communications apparatus.

With reference to the tenth aspect, in some implementations of the tenth aspect, the first relay service code is associated with a second application, and the second application is an application of the communications apparatus that supports a relay service. The processing unit is further configured to determine, based on whether the first relay service code is the same as or equivalent to a second relay service code, whether the second terminal device supports the first application by using the first parameter, where the second relay service code is associated with the second application, and the second relay service code is a relay service code stored in the communications apparatus.

According to an eleventh aspect, a communications apparatus is provided. The communications apparatus includes a transceiver unit and a processing unit. The transceiver unit is configured to receive a first request message from a first terminal device, where the first request message requests to obtain a first relay service code, the first relay service code includes information about a first parameter, the first parameter is a parameter for accessing a first application, and the first application is an application to be initiated by the first terminal device. The processing unit is configured to determine the relay service code based on the first parameter. The transceiver unit is further configured to send the first relay service code to the first terminal device via an AMF network element.

With reference to the eleventh aspect, in some implementations of the eleventh aspect, the first parameter includes one or more of the following parameters: a DNN, S-NASSI, an SSC mode, a PDU session type, an access mode priority, and a non-3GPP offloading indication.

With reference to the eleventh aspect, in some implementations of the eleventh aspect, the first relay service code is associated with the first application. The processing unit is specifically configured to determine the first relay service code based on the first parameter and the following information: subscription information of the first terminal device and an identifier of the first application.

With reference to the eleventh aspect, in some implementations of the eleventh aspect, the first relay service code is associated with the first application. The processing unit is specifically configured to determine the first relay service code based on the first parameter and the following information: subscription information of the first terminal device, an identifier of the first application, and downgrade indication information, where the downgrade indication information indicates whether the first terminal device accepts service downgrade.

With reference to the eleventh aspect, in some implementations of the eleventh aspect, the first relay service code is associated with a second application, and the second application is an application of the terminal device that supports a relay service. The transceiver unit is configured to send a second request message to a second PCF network element, where the second request message requests to obtain a second relay service code, the second relay service code is associated with the second application, and the second request message includes the first parameter and an identifier of the first application. The transceiver unit is further configured to receive the second relay service code from the second PCF network element. The processing unit is configured to determine the first relay service code based on the second relay service code.

With reference to the eleventh aspect, in some implementations of the eleventh aspect, the transceiver unit is further configured to send a third request message to a UDR network element, where the third request message requests to obtain information about the second PCF. The transceiver unit is further configured to receive the information about the second PCF from the UDR network element.

With reference to the eleventh aspect, in some implementations of the eleventh aspect, the first request message includes the following information: identification information of the first terminal device, a request type, and the identifier of the first application.

With reference to the eleventh aspect, in some implementations of the eleventh aspect, the first request message further includes downgrade indication information, and the downgrade indication information indicates whether the first terminal device accepts service downgrade.

According to a twelfth aspect, a communications apparatus is provided. The communications apparatus includes a transceiver unit. The transceiver unit is configured to send a first broadcast message, where the first broadcast message includes a first relay service code and a first parameter, the first parameter is a parameter for accessing a first application, and the first application is an application to be initiated by the communications apparatus. The transceiver unit is further configured to receive a response message from a second terminal device, where the response message indicates that the second terminal device supports accessing the first application by using the first parameter.

With reference to the twelfth aspect, in some implementations of the twelfth aspect, the first parameter includes one or more of the following parameters: a DNN, S-NASSI, an SSC mode, and a PDU session type.

According to a thirteenth aspect, a communications apparatus is provided. The communications apparatus includes a transceiver unit. The transceiver unit is configured to send a second broadcast message, where the second broadcast message includes a second relay service code, the second relay service code includes information about a second parameter, the second parameter is a parameter for accessing a second application, and the second application is an application of the communications apparatus that supports a relay service. The transceiver unit is further configured to receive a fourth request message from a first terminal device, where the fourth request message requests to establish a PC5 connection to the communications apparatus.

With reference to the thirteenth aspect, in some implementations of the thirteenth aspect, the second parameter includes one or more of the following parameters: a DNN, S-NASSI, an SSC mode, a PDU session type, an access mode priority, and a non-3GPP offloading indication.

With reference to the thirteenth aspect, in some implementations of the thirteenth aspect, the second relay service code is associated with the second application.

With reference to the thirteenth aspect, in some implementations of the thirteenth aspect, the second relay service code is associated with a first application, and the first application is an application to be initiated by the first terminal device.

With reference to the thirteenth aspect, in some implementations of the thirteenth aspect, the transceiver unit is further configured to send a fifth request message to a second PCF network element via an AMF network element, where the fifth request message requests to obtain the second relay service code. The transceiver unit is further configured to receive the second relay service code from the second PCF network element.

With reference to the thirteenth aspect, in some implementations of the thirteenth aspect, the fifth request message includes the following information: identification information of the second terminal device, a request type, and an identifier of the second application.

According to a fourteenth aspect, a communications apparatus is provided. The communications apparatus includes a transceiver unit and a processing unit. The transceiver unit is configured to receive a second broadcast message, where the second broadcast message includes a second relay service code, the second relay service code includes information about a second parameter, the second parameter is a parameter for accessing a second application, and the second application is an application of a second terminal device that supports a relay service. The transceiver unit sends a fourth request message to the second terminal device, where the fourth request message requests to establish a PC5 connection to the second terminal device.

With reference to the fourteenth aspect, in some implementations of the fourteenth aspect, the second parameter includes one or more of the following parameters: a DNN, S-NASSI, an SSC mode, a PDU session type, an access mode priority, and a non-3GPP offloading indication.

With reference to the fourteenth aspect, in some implementations of the fourteenth aspect, before the transceiver unit sends the fourth request message to the second terminal device, the processing unit is configured to determine whether the second terminal device supports accessing a first application by using a first parameter, where the first application is an application to be initiated by the communications apparatus, and the first parameter is a parameter for accessing the first application.

With reference to the fourteenth aspect, in some implementations of the fourteenth aspect, the second relay service code is associated with the second application. The processing unit is further configured to determine, based on whether the second relay service code is the same as or equivalent to a first relay service code, whether the second terminal device supports accessing the second application by using a first parameter, where the first relay service code is a relay service code stored in the communications apparatus, the first relay service code is associated with the second application or a first application, the first application is an application to be initiated by the communications apparatus, and the first parameter is a parameter for accessing the first application.

With reference to the fourteenth aspect, in some implementations of the fourteenth aspect, the second relay service code is associated with a first application, and the first application is an application to be initiated by the communications apparatus. The processing unit is further configured to determine, based on whether the second relay service code is the same as or equivalent to a first relay service code, whether the second terminal device supports accessing the first application by using a first parameter, where the first relay service code is a relay service code stored in the communications apparatus, the second relay service code is associated with the first application, and the first parameter is a parameter for accessing the first application.

With reference to the fourteenth aspect, in some implementations of the fourteenth aspect, the first parameter includes one or more of the following parameters: a DNN, S-NASSI, an SSC mode, a PDU session type, an access mode priority, and a non-3GPP offloading indication.

According to a fifteenth aspect, a communications apparatus is provided. The communications apparatus includes a transceiver unit and a processing unit. The transceiver unit is configured to receive a fifth request message from a second terminal device, where the fifth request message requests to obtain a second relay service code, the second relay service code includes information about a second parameter, the second parameter is a parameter for accessing a second application, and the second application is an application of a relay service that is supported by the second terminal device. The processing unit is configured to determine the second relay service code based on the second parameter. The transceiver unit is further configured to send the second relay service code to the second terminal device via an AMF network element.

With reference to the fifteenth aspect, in some implementations of the fifteenth aspect, the second parameter includes one or more of the following parameters: a DNN, S-NASSI, an SSC mode, a PDU session type, an access mode priority, and a non-3GPP offloading indication.

With reference to the fifteenth aspect, in some implementations of the fifteenth aspect, the second relay service code is associated with the second application. The processing unit is specifically configured to determine the second relay service code based on the second parameter and the following information: subscription information of the second terminal device and an identifier of the second application.

With reference to the fifteenth aspect, in some implementations of the fifteenth aspect, the second relay service code is associated with the second application. The processing unit is specifically configured to determine the second relay service code based on the second parameter and the following information: subscription information of the second terminal device and an identifier of the second application.

With reference to the fifteenth aspect, in some implementations of the fifteenth aspect, the second relay service code is associated with a first application, and the first application is an application to be initiated by a first terminal device. The transceiver unit is configured to send a sixth request message to a first PCF network element, where the sixth request message requests to obtain a first relay service code, the first relay service code is associated with the first application, and the sixth request message includes the second parameter and an identifier of the second application. The transceiver unit is further configured to receive the first relay service code from the first PCF network element. The processing unit is configured to determine the second relay service code based on the first relay service code.

With reference to the fifteenth aspect, in some implementations of the fifteenth aspect, the transceiver unit is further configured to send a seventh request message to a UDR network element, where the seventh request message requests to obtain information about the first PCF. The transceiver unit is further configured to receive the information about the first PCF from the UDR network element.

With reference to the fifteenth aspect, in some implementations of the fifteenth aspect, the fifth request message includes the following information: identification information of the second terminal device, a request type, and the identifier of the second application.

According to a sixteenth aspect, a communications apparatus is provided. The communications apparatus includes a transceiver unit. The transceiver unit is configured to send a second broadcast message, where the second broadcast message includes a second relay service code and a second parameter, the second parameter is a parameter for accessing a second application, and the second application is an application of the communications apparatus that supports a relay service. The communications apparatus is further configured to receive a request message from a first terminal device, where the request message requests to establish a PC5 connection to the communications apparatus.

With reference to the sixteenth aspect, in some implementations of the sixteenth aspect, the second parameter includes one or more of the following parameters: a DNN, S-NASSI, an SSC mode, a PDU session type, an access mode priority, and a non-3GPP offloading indication.

According to a seventeenth aspect, a communications apparatus is provided, including a processor. The processor is coupled to a memory, and may be configured to execute instructions or data in the memory, to implement the method in any one of the first aspect or the possible implementations of the first aspect, the method in any one of the fourth aspect or the possible implementations of the fourth aspect, or the method in any one of the sixth aspect or the possible implementations of the sixth aspect. The communications apparatus further includes the memory. The communications apparatus further includes a communications interface, and the processor is coupled to the communications interface.

In an implementation, the communications apparatus is a first terminal device. When the communications apparatus is the first terminal device, the communications interface may be a transceiver or an input/output interface.

In another implementation, the communications apparatus is a chip or a chip system configured in the first terminal device. When the communications apparatus is the chip or the chip system configured in the first terminal device, the communications interface may be an input/output interface.

The transceiver may be a transceiver circuit. The input/output interface may be an input/output circuit.

According to an eighteenth aspect, a communications apparatus is provided, including a processor. The processor is coupled to a memory, and may be configured to execute instructions or data in the memory, to implement the method in any one of the second aspect or the possible implementations of the second aspect, the method in any one of the fifth aspect or the possible implementations of the fifth aspect, or the method in any one of the eighth aspect or the possible implementations of the eighth aspect. The communications apparatus further includes the memory. The communications apparatus further includes a communications interface, and the processor is coupled to the communications interface.

In an implementation, the communications apparatus is a second terminal device. When the communications apparatus is the second terminal device, the communications interface may be a transceiver, or an input/output interface.

In another implementation, the communications apparatus is a chip or a chip system configured in the second terminal device. When the communications apparatus is the chip or the chip system configured in the second terminal device, the communications interface may be an input/output interface.

The transceiver may be a transceiver circuit. The input/output interface may be an input/output circuit.

According to a nineteenth aspect, a communications apparatus is provided, including a processor. The processor is coupled to a memory, and may be configured to execute instructions or data in the memory, to implement the method in any one of the third aspect or the possible implementations of the third aspect. The communications apparatus further includes the memory. The communications apparatus further includes a communications interface, and the processor is coupled to the communications interface.

In an implementation, the communications apparatus is a first PCF network element. When the communications apparatus is the first PCF network element, the communications interface may be a transceiver or an input/output interface.

In another implementation, the communications apparatus is a chip or a chip system configured in the first PCF network element. When the communications apparatus is the chip or the chip system configured in the first PCF network element, the communications interface may be an input/output interface.

The transceiver may be a transceiver circuit. The input/output interface may be an input/output circuit.

According to a twentieth aspect, a communications apparatus is provided, including a processor. The processor is coupled to a memory, and may be configured to execute instructions or data in the memory, to implement the method in any one of the seventh aspect or the possible implementations of the seventh aspect. The communications apparatus further includes the memory. The communications apparatus further includes a communications interface, and the processor is coupled to the communications interface.

In an implementation, the communications apparatus is a second PCF network element. When the communications apparatus is the second PCF network element, the communications interface may be a transceiver or an input/output interface.

In another implementation, the communications apparatus is a chip or a chip system configured in the second PCF network element. When the communications apparatus is the chip or the chip system configured in the second PCF network element, the communications interface may be an input/output interface.

The transceiver may be a transceiver circuit. The input/output interface may be an input/output circuit.

According to a twenty-first aspect, a processor is provided, including an input circuit, an output circuit, and a processing circuit. The processing circuit is configured to: receive a signal through the input circuit, and send a signal through the output circuit, to enable the processor to perform the method in any one of the first aspect to the eighth aspect or the possible implementations of the first aspect to the eighth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twenty-second aspect, a processing apparatus is provided, including a processor and a memory. The processor is configured to: read instructions stored in the memory, receive a signal through a receiver, and transmit the signal through a transmitter, to perform the method according to any one of the first aspect to the eighth aspect or the possible implementations of the first aspect to the eighth aspect.

There are one or more processors and one or more memories.

The memory may be integrated into the processor, or the memory and the processor are disposed separately.

In a specific implementation process, the memory may be a non-transitory (non-transitory) memory, for example, a read-only memory (read-only memory, ROM). The memory and the processor may be integrated into a same chip, or may be disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the twenty-second aspect may be one or more chips, or may be one chip system. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twenty-third aspect, a computer program product is provided. The computer program product includes a computer program (also referred to as code or instructions). When the computer program is run, the method in any one of the first aspect to the eighth aspect or the possible implementations of the first aspect to the eighth aspect is performed.

According to a twenty-fourth aspect, a computer-readable storage medium is provided. The computer-readable storage medium stores a computer program (also referred to as code or instructions). When the computer program is run on a computer, the computer is enabled to perform the method in any one of the first aspect to the eighth aspect or the possible implementations of the first aspect to the eighth aspect.

According to a twenty-fifth aspect, a communications system is provided, including: the foregoing first terminal device, the foregoing second terminal device, the foregoing first PCF network element, and/or the foregoing second PCF network element.

### BRIEF DESCRIPTION OF DRAWINGS

FIG. 1 is a schematic diagram of an application scenario applicable to a method according to an embodiment of this application;
FIG. 2 is a schematic flowchart of a connection establishment method according to an embodiment of this application;
FIG. 3 is a schematic flowchart of a method for obtaining a relay service code according to an embodiment of this application;
FIG. 4 is a schematic flowchart of a connection establishment method according to an embodiment of this application;
FIG. 5 is a schematic flowchart of a method for obtaining a relay service code according to an embodiment of this application;
FIG. 6 to FIG. 9 are schematic flowcharts of a connection establishment method according to an embodiment of this application;
FIG. 10 is a schematic block diagram of a communications apparatus according to an embodiment of this application; and
FIG. 11 is a schematic diagram of a structure of a terminal device according to an embodiment of this application.

### DESCRIPTION OF EMBODIMENTS

The following describes technical solutions of this application with reference to accompanying drawings.

The technical solutions of embodiments of this application may be applied to various communications systems, such as a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a worldwide interoperability for microwave access (Worldwide Interoperability for Microwave Access, WiMAX) communications system, a 5th generation (5th Generation, 5G) system or a new radio (New Radio, NR) system, and a future communications system.

It should be understood that a specific structure of an execution body of a method in embodiments of this application is not specifically limited in embodiments of this application, provided that a program that records code for the method in embodiments of this application can be run to perform communication according to the method in embodiments of this application. For example, the method in embodiments of this application may be performed by a terminal or a network side device, or a function module that is in the user equipment or the network side device and that can invoke and execute the program.

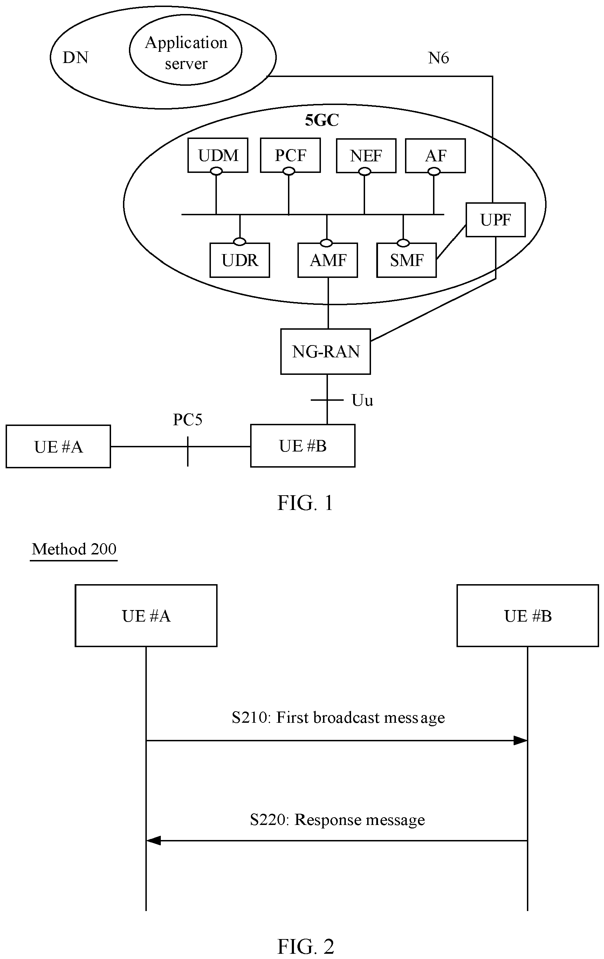

For ease of understanding of embodiments of this application, an application scenario of embodiments of this application is first described in detail with reference to FIG. 1.

FIG. 1 is a schematic diagram of a network architecture applicable to a method according to an embodiment of this application. As shown in the figure, the network architecture may specifically include the following network elements:
1. User equipment (user equipment, UE): The UE may be referred to as a terminal device, a terminal, an access terminal, a subscriber unit, a subscriber station, a mobile station, a mobile console, a remote station, a remote terminal, a mobile device, a user terminal, a wireless communications device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in embodiments of this application. FIG. 1 shows UE #A and UE #B. The UE #B is connected to a next generation radio access network (next generation radio access network, NG-RAN) through a Uu interface, and then the UE #B accesses a 5G core network (5G core network, 5GC) over the NG-RAN. The UE #A is connected to the UE #B through a PC5 interface.
2. Access network (access network, AN): The AN provides a network access function for an authorized user in a specific area, and can use transmission tunnels with different quality based on user levels, service requirements, and the like. Different access networks may use different access technologies. Currently, there are two types of radio access technologies: a 3GPP access technology and a non-3rd Generation Partnership Project (non-3GPP) access technology. The 3GPP access technology is, for example, a radio access network technology used in a 3rd generation (3rd generation, 3G) system, a radio access network technology used in a 4G system, or the NG-RAN technology in FIG. 1 (for example, a radio access technology used in a 5G system). The 3GPP access technology is an access technology that complies with a 3GPP standard specification, and an access network that uses the 3GPP access technology is referred to as a radio access network (radio access network, RAN). An access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in Wi-Fi.
   An access network that implements a network access function based on a wireless communications technology may be referred to as a radio access network (radio access network, RAN). The radio access network can manage radio resources, and provide an access service for a terminal, to further complete forwarding of a control signal and user data between the terminal and a core network.
   For example, the radio access network may be a NodeB (NodeB), an evolved NodeB (evolved NodeB, eNB or eNodeB), a gNB (gNB) in a 5G mobile communications system, a base station in a future mobile communications system, or an AP in a Wi-Fi system, or may be a radio controller in a cloud radio access network (cloud radio access network, CRAN) scenario, or may be a relay station, an access point, a vehicle-mounted device, a wearable device, a network device in a future 5G network, or a network device in a future evolved PLMN. A specific technology and a specific device form used by the radio access network device are not limited in embodiments of this application.
3. Access and mobility management function (access and mobility management function, AMF) entity: The AMF entity is mainly configured to perform mobility management, access management, and the like, and may be configured to implement a function other than session management in functions of a mobility management entity (mobility management entity, MME), for example, a function such as lawful interception or access authorization (or authentication). In embodiments of this application, the AMF entity may be configured to implement functions of an access and mobility management function network element.
4. Session management function (session management function, SMF) entity: The SMF entity is mainly configured to perform session management, internet protocol (Internet Protocol, IP) address assignment and management of UE, manageable user plane function selection, a termination point of a policy control or charging function interface, a downlink data notification, and the like. In embodiments of this application, the SMF entity may be configured to implement functions of a session management function network element.
5. User plane function (user plane function, UPF) entity: The UPF entity is a data plane gateway, and may be configured to perform packet routing and forwarding, quality of service (quality of service, QoS) processing of user plane data, or the like. User data may be accessed to a data network (data network, DN) by using the network element. In embodiments of this application, the UPF entity may be configured to implement functions of a user plane gateway.
6. Data network (DN): The DN is a network that provides data transmission, for example, a carrier service network, the internet (Internet), or a third-party service network. FIG. 1 shows an application server deployed by a third party.
7. Network exposure function (network exposure function, NEF) entity: The NEF entity is configured to securely open a service and a capability that are provided by a 3GPP network function.
8. Policy control function (policy control function, PCF) entity: The PCF entity is a unified policy framework used for instructing network behavior, and provides policy rule information and the like for control plane function network elements (such as AMF and SMF network elements).
9. Unified data management (unified data management, UDM) entity: The UDM entity is configured to: implement unified data management and 5G user data management, process a user identifier, and perform access authentication, registration, mobility management, or the like.
10. Application function (application function, AF) entity: The AF entity is configured to: perform data routing affected by an application, access a network exposure function network element, or interact with a policy framework for policy control and the like. The AF may be a third-party functional entity, or may be an application service deployed by a carrier, for example, an IP multimedia subsystem (IP Multimedia Subsystem, IMS) voice call service. When interacting with the core network, the application function entity of the third-party application may further perform authorization processing by using the NEF entity. For example, the third-party application function directly sends a request message to the NEF entity. The NEF entity determines whether the AF entity is allowed to send the request message, and if the authentication succeeds, forwards the request message to the corresponding PCF entity or UDM entity.
11. Unified data repository (unified data repository, UDR) entity: The UDR entity is configured to access data of a type, such as subscription data, policy data, and application data.

In the network architecture, an N6 interface is a reference point between the UPF entity and the DN, and is used to transmit user plane data and the like.

It should be understood that the foregoing network architecture applied to embodiments of this application is merely an example of a network architecture described from a perspective of a conventional point-to-point architecture and a service architecture, and a network architecture applicable to embodiments of this application is not limited thereto. Any network architecture that can implement functions of the foregoing network elements is applicable to embodiments of this application.

It should be further understood that the AMF entity, the SMF entity, the UPF entity, the NEF entity, the PCF entity, the UDM entity, the AF entity, and the UDR entity that are shown in FIG. 1 may be understood as network elements that are in the core network and that are configured to implement different functions, and may be, for example, combined into a network slice as required. These core network elements may be independent devices, or may be integrated into a same device to implement different functions. This is not limited in this application.

For ease of description, an entity configured to implement an AMF is denoted as an access and mobility management function network element, an entity configured to implement an SMF is denoted as a session management function network element, an entity configured to implement a UPF is denoted as a user plane gateway, an entity configured to implement a UDR function is denoted as a unified data repository network element, and an entity configured to implement a PCF is denoted as a policy control function network element in the following description. It should be understood that the foregoing names are merely used to distinguish between different functions, and do not indicate that these network elements are independent physical devices. Specific forms of the foregoing network elements are not limited in this application. For example, the network elements may be integrated into a same physical device, or may be different physical devices. In addition, the foregoing names are merely used to distinguish between different functions, and shall not constitute any limitation on this application. This application does not exclude a possibility of using another name in a 5G network and another future network. For example, in a 6G network, terms in 5G may still be used for some or all of the foregoing network elements, or other names may be used. This is uniformly described herein, and details are not described below again.

It should be further understood that names of interfaces between the foregoing network elements in FIG. 1 are only examples, and the interfaces may have other names during specific implementation. This is not specifically limited in this application. In addition, names of messages (or signaling) transmitted between the foregoing network elements are merely examples, and do not constitute any limitation on functions of the messages.

In a process in which the UE establishes a PDU session, the UE may establish the PDU session according to a specific URSP rule. The URSP rule can be provided only by a home-policy control function (home-policy control function, H-PCF) entity, and the URSP rule is mainly used by the UE to determine a method for selecting a routing policy for a to-be-transmitted service data flow, for example, determine whether the to-be-transmitted service data flow supports offloading to non-3GPP access, or select information such as a specific DNN, S-NSSAI, an SSC mode, and a PDU session type for the to-be-transmitted service data flow.

A structure of the URSP mainly includes two parts: a traffic descriptor (traffic descriptor), which defines a feature that can be used for traffic identification in the URSP, and a list of route selection descriptor (list of route selection descriptor).

A process in which the UE performs URSP match may be briefly described as follows:
When the UE determines that a specific service/application needs to be initiated, the UE sequentially matches the to-be-initiated service/application against traffic descriptors in URSP rules according to priorities of the URSP rules, where the URSP rules are received by the UE. If a specific URSP rule is matched (the matched URSP rule may be a default rule, that is, a traffic descriptor in the URSP rule matches all services/applications), the UE continues to determine whether an existing PDU session meets a definition of a route selection descriptor in the matched URSP rule.

If information such as a DNN, S-NASSI, an SSC mode, or a PDU session type that corresponds to the existing PDU session is consistent with information such as a DNN, S-NASSI, an SSC mode, or PDU session type information that corresponds to the to-be-initiated service/application, the UE may select to initiate a PDU session modification request based on the existing PDU session. The PDU session modification request message may carry the following parameters: a PDU session identifier and an N1 interface session management container (N1 SM Container). The PDU session identifier is used by the access and mobility management function network element to associate the identifier with a specific session context, and the N1 SM container is transparently transmitted by the access and mobility management function network element to the session management function network element. The N1 SM container includes a PDU session modification request, and the PDU session modification request includes a PDU session identifier, a packet filter, an operation, and service of quality (service of quality, QoS) of the request.

If information such as a DNN, S-NASSI, an SSC mode, or a PDU session type that corresponds to the existing PDU cannot match information such as a DNN, S-NASSI, an SSC mode, or a PDU session type that corresponds to the to-be-initiated service/application, the UE initiates a PDU session establishment request for the to-be-initiated service/application. The PDU session establishment request message may carry the following parameters: a newly assigned PDU session identifier, a DNN, S-NASSI, and an N1 SM container. The newly assigned PDU session identifier is used to identify a PDU session corresponding to the PDU session establishment request. The DNN and the S-NASSI are used as parameters used by the access and mobility management function network element to select a session management function network element for the PDU session establishment request. The N1 SM container is transparently transmitted by the access and mobility management function network element to the selected session management function network element. The N1 SM container includes an SSC mode and a PDU session type.

In a relay access scenario, when the UE is located in an edge area with relatively weak coverage of a carrier network or located outside the coverage of the carrier network, if the UE needs to initiate a specific service or application, the UE may establish a PC5 connection to neighboring UE, to indirectly access the 5G network. For example, when the UE #A shown in FIG. 1 needs to initiate a specific service or application, the UE #A may establish a PC5 connection to the UE #B, to access the 5GC.

For ease of understanding, in the following, UE that uses a relay service is denoted as remote (remote) UE, and UE that provides a relay service for the remote UE is denoted as relay (relay) UE. For example, the UE #A shown in FIG. 1 corresponds to the remote UE, and the UE #B corresponds to the relay UE.

The remote UE establishes a PC5 connection to the relay UE in the following two manners:

### Mode A:

The relay UE sends a broadcast message on a corresponding frequency band based on frequency information received from a policy control function network element. The broadcast message may include the following information: (a) Identifier of the relay UE: The identifier is a link layer identifier (link layer identifier). (b) Information about the relay UE: The information may include a layer 2 identifier or application layer user information of the relay UE. (c) Relay service code: The relay service code may include service information, a security policy, and optionally, may further include a list of authorized UEs allowed for access. The relay service code is locally preconfigured by the relay UE.

Correspondingly, the remote UE listens to the broadcast message on the corresponding frequency band based on the frequency information received from a policy control function network element. Further, the remote UE parses the relay service code in the broadcast information obtained through listening, and if the relay service code obtained through listening can correspond to a relay service code locally preconfigured by the remote UE, the remote UE may determine that the relay UE can provide a relay service of an application or a service that needs to be initiated by the remote UE. Still further, the remote UE initiates a PC5 establishment request to the relay UE, to establish the PC5 connection to the relay UE.

### Mode B:

The remote UE sends a broadcast message on a corresponding frequency band based on frequency information received from a policy control function network element. The broadcast message may include the following information: (a) Information about the remote UE: The information may include a link layer identifier or application layer user information of the remote UE. (b) Relay service code: The relay service code may include service information and a security policy. The relay service code is locally preconfigured by the remote UE. If the remote UE can obtain an identifier of the relay UE in advance, the broadcast information may further include the identifier of the relay UE.

Correspondingly, the relay UE listens to the broadcast message on the corresponding frequency band based on the frequency information received from a policy control function network element. Further, the relay UE parses the relay service code in the broadcast message obtained through listening, and if the relay service code obtained through listening can correspond to a relay service code locally preconfigured by the relay UE, the relay UE may determine that the relay UE can provide the remote UE with a relay service of an application or a service that needs to be initiated by the remote UE.

Further, the relay UE sends a response message to the remote UE. The response message may include the following information: (a) Identifier of the relay UE: The identifier is a link layer identifier. (b) Information about the remote UE. Correspondingly, after receiving the response message, the remote UE initiates a PC5 establishment request to the relay UE, to establish the PC5 connection to the relay UE.

That the relay service code locally preconfigured by the remote UE corresponds to the relay service code locally configured by the relay UE may be understood as that the relay service code locally configured by the remote UE is the same as or equivalent to the relay service code locally preconfigured by the relay UE, or peer information can be obtained by using a specific encryption/decryption algorithm. For example, the relay service code of the remote UE and the relay service code of the relay UE correspond to a same application identifier (application identifier).

In a proximity-based services relay solution defined in the 4G system, because a relay service is used only for a public security service, a relay service code stored in the remote UE and the relay UE is preconfigured, and the relay service code is directly associated with the public security service. However, in discussion of the current 5G system, a relay service is not limited to a public security scenario. If a relay service code continues to be preconfigured, the relay service may fail to reflect actual application, and cannot be dynamically adjusted flexibly.

In addition, when the remote UE initiates a service or an application by using the relay UE, the relay UE establishes a PDU session for the service or the application according to a URSP rule received by the relay UE. That is, information such as a DNN, S-NASSI, an SSC mode, or a PDU session type that is selected based on the service or the application is a parameter configured by a carrier for the relay UE. The remote UE may subscribe to a corresponding value-added service or a value-added package. Therefore, the carrier may configure information with a higher priority such as a DNN, S-NASSI, an SSC mode, or a PDU session type for the remote UE. If the remote UE matches the relay UE based on the foregoing method, the matched relay UE may fail to provide service guarantee required by the remote UE.

In view of this, embodiments of this application provide a connection establishment method, so that remote UE can find relay UE that supports accessing a specific application service in a manner required by the remote UE.

The following describes in detail the method provided in embodiments of this application with reference to the accompanying drawings.

It should be noted that, in the following process of describing embodiments with reference to the accompanying drawings, the figures are merely for ease of understanding, and shall not constitute any limitation on this application. In addition, as shown in the figure, the AMF may correspond to an access and mobility management function network element, the UDR may correspond to a unified data repository network element, and the PCF may correspond to a policy management function network element. Names of the network elements are defined only for distinguishing between different functions, and shall not constitute any limitation on this application. This application does not exclude a possibility of defining another network element to implement a same or similar function.

It should be further noted that a first relay service code mentioned in embodiments of this application corresponds to a relay service code stored in the UE #A (remote UE). The first relay service code may include a plurality of pieces of specific content. For example, the first relay service code (corresponding to the following relay service code #1) may be associated with an application to be initiated by the UE #A, and does not include information about a first parameter. Alternatively, the first relay service code (corresponding to the following relay service code #2) may be associated with an application to be initiated by the UE #A or an application of the UE #B that supports a relay service, and includes information about a first parameter. Alternatively, the first relay service code (corresponding to the following relay service code #3) may be associated with an application of the UE #B that supports a relay service, and does not include information about a first parameter. The first parameter herein may be one or more of the following parameters: a DNN, S-NASSI, an SSC mode, a PDU session type, an access mode priority, and a non-3GPP offloading indication.

It should be further noted that a second relay service code mentioned in embodiments of this application corresponds to a relay service code stored in the UE #B (relay UE). The second relay service code may include a plurality of pieces of specific content. For example, the second relay service code (corresponding to the following relay service code #4) may be associated with an application of the UE #B that supports a relay service, and does not include information about a second parameter. Alternatively, the second relay service code (corresponding to the following relay service code #5) may be associated with an application to be initiated by the UE #A or an application of the UE #B that supports a relay service, and includes information about a second parameter. Alternatively, the second relay service code (corresponding to the following relay service code #6) may be associated with an application to be initiated by the UE #A, and does not include information about a second parameter. The second parameter herein may be one or more of the following parameters: a DNN, S-NASSI, an SSC mode, a PDU session type, an access mode priority, and a non-3GPP offloading indication.

It should be further noted that an application mentioned in embodiments of this application includes an application and/or a service.

FIG. 2 is a schematic flowchart of a connection establishment method according to an embodiment of this application. The method shown in FIG. 2 may be performed by the UE #A and the UE #B in the system shown in FIG. 1. The UE #A corresponds to a first terminal device, and the UE #B corresponds to a second terminal device. A method for establishing a connection between the UE #A and the UE #B described in the method 200 corresponds to the mode B, that is, remote UE sends a broadcast message. As shown in FIG. 2, the method includes S210 and S220. The following describes each step in detail.

S210: The UE #A sends a first broadcast message.

The UE #A may send the first broadcast message on a corresponding frequency band based on frequency information received from a policy control function network element serving the UE #A. Correspondingly, the UE #B may receive the first broadcast message on the corresponding frequency band based on the frequency information received from a policy control function network element serving the UE #B.

The first broadcast message is used to discover the UE #B that can provide a relay service for the UE #A. Specific content of the first broadcast message is not limited in embodiments of this application.

In an implementation, the first broadcast message may include the following information: information about the UE #A, a relay service code #1 (an example of the first relay service code), and a first parameter.

The information about the UE #A is used to identify the UE #A, and may include a link layer identifier of the UE #A or application layer user information of the UE #A.

The relay service code #1 is associated with a first application, the first application is an application to be initiated by the UE #A, and the relay service code #1 may include information about the application to be initiated by the UE #A. Optionally, the relay service code #1 may further include a relay service security policy of the UE #A.

The relay service code #1 may be locally preconfigured by the UE #A, or may be obtained by the UE #Afrom the policy control function network element serving the UE #A. This is not limited in embodiments of this application. The following describes, with reference to another embodiment, a method for obtaining the relay service code #1 by the UE #A from the policy control function network element serving the UE #A. For brevity, details are not described herein.

The first parameter is a parameter for accessing the first application, that is, the first parameter is a parameter that needs to be used by the UE #A to access the first application, or a parameter that is allowed to be used by the UE #A to access the first application. In other words, the first parameter is a parameter in route selection descriptor information in a URSP rule configured by a carrier for the application to be initiated by the UE #A. The first parameter may be one or more of parameters in the route selection descriptor information: a DNN, S-NAASI, an SSC mode, a PDU session type, an access mode priority, a non-3GPP offloading indication, and the like.

The first parameter may be obtained by the UE #A from the policy control function network element serving the UE #A.

In another implementation, the first broadcast message may include the following information: information about the UE #Aand a relay service code #2 (an example of the first relay service code).

The information about the UE #A is used to identify the UE #A, and may include a link layer identifier of the UE #A or application layer user information of the UE #A.

The relay service code #2 includes information about a first parameter. That the relay service code #2 includes information about a first parameter may be understood as that the relay service code #2 includes a code corresponding to the first parameter, or the relay service code #2 includes the first parameter. In other words, the first parameter may be obtained from the relay service code #2 through parsing.

A specific form of the relay service code #2 is not limited in embodiments of this application.

In an example, the relay service code #2 is associated with a first application, which may also be understood as that the relay service code #2 is associated with the UE #A. In this case, the relay service code #2 may further include information about the first application. Optionally, the relay service code #2 may further include a relay service security policy of the UE #A.

In another example, the relay service code #2 is associated with a second application, and the second application is an application of the UE #B that supports a relay service, which may also be understood as that the relay service code #2 is associated with the UE #B. In this case, the relay service code #2 may include information about the second application. Optionally, the relay service code #2 may further include a relay service security policy of the UE #B.

The relay service code #2 may be obtained by the UE #A from the policy control function network element serving the UE #A. The following describes in detail, with reference to another embodiment, a method for obtaining the relay service code #2 by the UE #A from the policy control function network element serving the UE #A. For brevity, details are not described herein.

In still another implementation, the first broadcast message may include the following information: information about the UE #Aand a relay service code #3 (an example of the first relay service code).

The information about the UE #A is used to identify the UE #A, and may include a link layer identifier of the UE #A or application layer user information of the UE #A.

The relay service code #3 is associated with a second application, which may also be understood as that the relay service code #3 is associated with the UE #B. In addition, the UE #B corresponding to the relay service code #3 can provide a relay service for the UE #A. In other words, the relay service code #3 is an available relay service code. The relay service code #3 may include information about the second application. Optionally, the relay service code #3 may further include a relay service security policy of the UE #B.

The relay service code #3 may be obtained by the UE #A from the policy control function network element serving the UE #A. The following describes in detail, with reference to another embodiment, a method for obtaining the relay service code #3 by the UE #A from the policy control function network element serving the UE #A. For brevity, details are not described herein.

In still another implementation, the first broadcast message may include the following information: information about the UE #A and a relay service code #1 (an example of the first relay service code).

The information about the UE #A is used to identify the UE #A, and may include a link layer identifier of the UE #A or application layer user information of the UE #A.

The relay service code #1 is associated with a first application, the first application is an application to be initiated by the UE #A, and the relay service code #1 may include information about the application to be initiated by the UE #A. Optionally, the relay service code #1 may further include a relay service security policy of the UE #A.

The relay service code #1 may be locally preconfigured by the UE #A, or may be obtained by the UE #A from the policy control function network element serving the UE #A. This is not limited in embodiments of this application. The following describes, with reference to another embodiment, a method for obtaining the relay service code #1 by the UE #A from the policy control function network element serving the UE #A. For brevity, details are not described herein.

S220: The UE #B sends a response message to the UE #A.

The response message indicates that the UE #B supports accessing the first application by using the first parameter. The response message may include an identifier of the UE #B and information about the UE #A. The identifier of the UE #B is used to identify the UE #B, and may include a link layer identifier of the UE #B.

As described above, the first broadcast message sent by the UE #A may include different content.

In an implementation, the first broadcast message sent by the UE #A includes the following information: information about the UE #A, a relay service code #1 (an example of the first relay service code), and a first parameter.

In this case, after receiving the first broadcast message sent by the UE #A, the UE #B first parses the relay service code #1 in the first broadcast message, to determine whether the UE #B can provide a relay service of the application to be initiated by the UE #A.

That the UE #B parses the relay service code #1 in the first broadcast message may be understood as that the UE #B determines whether the relay service code #1 in the broadcast message is the same as or equivalent to a relay service code #4 (an example of the second relay service code) configured by the UE #B, or whether peer information can be obtained by using a specific encryption/decryption algorithm for the relay service code #1 and the relay service code #4, for example, whether the UE #B can obtain a same application identifier by using a specific decryption algorithm for the relay service code #1 and the relay service code #4. For another example, the relay service code #4 configured by the UE #B may alternatively be a filter of a target relay service code. The UE #B may determine, based on the filter, whether the relay service code #1 meets a requirement of the filter, that is, whether the UE #B can provide, for the UE #A corresponding to the relay service code #1, the relay service of the application to be initiated by the UE #A.

The relay service code #4 is associated with a second application, which may also be understood as that the relay service code #4 is associated with the UE #B. The relay service code #4 is a relay service code stored in the UE #B, and may be locally preconfigured by the UE #B, or may be obtained by the UE #B from the policy control function network element serving the UE #B. This is not limited in embodiments of this application. For a method for obtaining the relay service code #4 by the UE #B from the policy control function network element serving the UE #B, refer to the method for obtaining the relay service code #1 by the UE #A. For brevity, details are not described in embodiments of this application.

If the UE #B determines that the relay service code #1 is the same as or equivalent to the relay service code #4, or the peer information can be obtained by using the specific encryption/decryption algorithm, the UE #B continues to determine whether the UE #B supports accessing the first application by using the first parameter.

If the UE #B determines that the UE #B supports accessing the first application by using the first parameter, the UE #B determines that the UE #B can provide a relay service of the first application. Then, the UE #B may return a response message to the UE #A.

For example, the UE #B may determine, based on whether the first parameter is consistent with or equivalent to a second parameter, whether the UE #B supports accessing the first application by using the first parameter. The second parameter is a parameter for accessing the second application. If the first parameter is consistent with or equivalent to the second parameter, the UE #B determines that the UE #B supports accessing the first application by using the first parameter.

Optionally, if the first parameter includes a plurality of parameters, when determining that the UE #B supports accessing the first application by using at least one parameter in the first parameter, the UE #B may determine that the UE #B can provide the relay service of the first application. For example, it is assumed that the first parameter includes a DNN and S-NAASI. In this case, when determining that the UE #B supports accessing the first application by using the DNN in the first parameter, the UE #B determines that the UE #B can provide the relay service of the first application. Alternatively, when determining that the UE #B supports accessing the first application by using the S-NAASI in the first parameter, the UE #B determines that the UE #B can provide the relay service of the first application. Alternatively, when determining that the UE #B supports accessing the first application by using the DNN and the S-NAASI in the first parameter, the UE #B determines that the UE #B can provide the relay service of the first application.

In another implementation, the first broadcast message sent by the UE #A includes the following information: information about the UE #A and a relay service code #2 (an example of the first relay service code).

In this case, after receiving the first broadcast message sent by the UE #A, the UE #B may parse the relay service code #2 in the first broadcast message, to determine whether the UE #B can provide a relay service of the first application.

In an example, when the relay service code #2 is associated with the first application, that the UE #B parses the relay service code #2 in the first broadcast message may be understood as that the UE #B determines whether the relay service code #2 is the same as or equivalent to a relay service code #5 (an example of the second relay service code) obtained by the UE #B in advance, which may also be understood as that the UE #B obtains information about a first parameter that is included in the relay service code #2.

If the UE #B learns of a method for configuring the relay service code #2 by the policy control function network element serving the UE #Afor the UE #A, the UE #B may successfully parse the relay service code #2. For example, if a method for configuring the relay service code #5 by the policy control function network element serving the UE #B for the UE #B is the same as the method for configuring the relay service code #2 by the policy control function network element serving the UE #A for the UE #A, the UE #B may learn of the method for configuring the relay service code #2 by the policy control function network element serving the UE #A for the UE #A. The relay service code #5 is associated with a second application. Alternatively, the UE #B may obtain the information about the first parameter in the relay service code #2 by using a specific encryption/decryption algorithm for the relay service code #2. The foregoing describes, by using an example, the method for parsing the relay service code #2 by the UE #B. This should not impose a limitation on embodiments of this application.

Further, if the UE #B can successfully parse the relay service code #2, that is, can successfully obtain the information about the first parameter that is included in the relay service code #2, the UE #B continues to determine whether the UE #B supports accessing the first application by using the first parameter.

If the UE #B determines that the UE #B supports accessing the first application by using the first parameter, the UE #B determines that the UE #B can provide the relay service of the first application. Then, the UE #B may return a response message to the UE #A.

For example, the UE #B may determine, based on whether the first parameter is the same as or equivalent to a second parameter, whether the UE #B supports accessing the first application by using the first parameter. The second parameter is a parameter for accessing the second application. If the first parameter is the same as or equivalent to the second parameter, the UE #B determines that the UE #B supports accessing the first application by using the first parameter.

Optionally, if the first parameter includes a plurality of parameters, when determining that the UE #B supports accessing the first application by using at least one parameter in the first parameter, the UE #B determines that the UE #B can provide the relay service of the first application. For example, it is assumed that the first parameter includes a DNN and S-NAASI. In this case, when determining that the UE #B supports accessing the first application by using the DNN in the first parameter, the UE #B determines that the UE #B can provide the relay service of the first application. Alternatively, when determining that the UE #B supports accessing the first application by using the S-NAASI in the first parameter, the UE #B determines that the UE #B can provide the relay service of the first application. Alternatively, when determining that the UE #B supports accessing the first application by using the DNN and the S-NAASI in the first parameter, the UE #B determines that the UE #B can provide the relay service of the first application.

In another example, when the relay service code #2 is associated with the first application, that the UE #B parses the relay service code #2 in the first broadcast message may be understood as that the UE #B determines whether the relay service code #2 is the same as or equivalent to a relay service code #5 obtained by the UE #B in advance. For example, the UE #B may determine, based on whether a prefix of the relay service code #2 is the same as or equivalent to that of the relay service code #5, whether the relay service code #2 is the same as or equivalent to the relay service code #5. The UE #B can provide a relay service for the UE #A corresponding to the relay service code #5, that is, supports accessing the first application by using the first parameter. The relay service code #5 is associated with the first application.

Therefore, if the UE #B determines that the relay service code #2 in the first broadcast message is the same as or equivalent to the relay service code #5 obtained by the UE #B in advance, the UE #B may determine that the UE #B can provide the relay service of the first application, that is, supports accessing the first application by using the first parameter. Then, the UE #B may return a response message to the UE #A.

Optionally, the UE #B obtains a plurality of relay service codes #5 in advance. If the relay service code #2 is the same as or equivalent to one of the relay service codes #5, the UE #B may determine that the UE #B can provide the relay service of the first application.

In another example, when the relay service code #2 is associated with the second application, that the UE #B parses the relay service code #2 in the first broadcast message may be understood as that the UE #B determines whether the relay service code #2 is the same as or equivalent to a relay service code #5 stored in the UE #B. For example, the UE #B may determine, based on whether a prefix of the relay service code #2 is the same as or equivalent to that of the relay service code #5, whether the relay service code #2 is the same as or equivalent to the relay service code #5. The relay service code #5 is associated with the second application.

If the UE #B determines that the relay service code #2 is the same as or equivalent to the relay service code #5, the UE #B determines that the UE #B supports accessing the first application by using the first parameter. Then, the UE #B may return a response message to the UE #A.

In still another implementation, the broadcast message may further include the following information: information about the UE #A and a relay service code #3 (an example of the first relay service code).

In this case, after receiving the first broadcast message sent by the UE #A, the UE #B may first parse the relay service code #3 in the first broadcast message, to determine whether the UE #B can provide a relay service of the first application.

That the UE #B parses the relay service code #3 may be understood as that the UE #B determines whether the relay service code #3 is the same as or equivalent to a relay service code #4 (an example of the second relay service code) stored in the UE #B. For example, the UE #B may determine, based on whether a prefix of the relay service code #3 is the same as or equivalent to that of the relay service code #3, whether the relay service code #3 is the same as or equivalent to the relay service code #3. The relay service code #4 is associated with a second application.

If the UE #B determines that the relay service code #3 is the same as or equivalent to the relay service code #4, the UE #B determines that the UE #B can provide the relay service of the first application, that is, supports accessing the first application by using the first parameter. Then, the UE #B may return a response message to the UE #A.

In still another implementation, the broadcast message may further include the following information: information about the UE #A and a relay service code #1 (an example of the first relay service code).

In this case, after receiving the first broadcast message sent by the UE #A, the UE #B first parses the relay service code #1 in the first broadcast message, to determine whether the UE #B can provide a relay service of the first application.

That the UE #B parses the relay service code #1 may be understood as that the UE #B determines whether the relay service code #1 is the same as or equivalent to a relay service code #6 (an example of the second relay service code) stored in the UE #B. For example, the UE #B may determine, based on whether a prefix of the relay service code #1 is the same as or equivalent to that of the relay service code #6, whether the relay service code #2 is the same as or equivalent to the relay service code #5. The relay service code #6 is associated with the first application.

If the UE #B determines that the relay service code #1 is the same as or equivalent to the relay service code #6, the UE #B determines that the UE #B can provide the relay service of the first application, that is, supports accessing the first application by using the first parameter. Then, the UE #B may return a response message to the UE #A.

Optionally, the UE #B stores a plurality of relay service codes #6. If the relay service code #1 is the same as or equivalent to one of the relay service codes #6, the UE #B may determine that the UE #B can provide the relay service of the first application.

Optionally, after receiving the response message of the UE #B, the UE #A may send a PC5 connection request message to the UE #B, to establish a PC5 connection to the UE #B.

Further, after the UE #A establishes the PC5 connection to the UE #B, if the UE #B determines that there is no locally available PDU session, the UE #B performs URSP match based on an identifier of the first application, and initiates a PDU session establishment procedure based on a list of route selection descriptors in the matched URSP rule. One or more of parameters such as a DNN, S-NSSAI, an SSC mode, and a PDU session type that are requested by the PDU session establishment request are consistent with or equivalent to a session parameter required by the UE #A.

In embodiments of this application, the first broadcast message sent by the UE #A may include the first parameter, or the first relay service code may include the information about the first parameter, or the first broadcast message sent by the UE #A may include the available relay service code obtained from the policy control function network element. Therefore, the UE #B that is matched based on the first broadcast message supports accessing the first application by using the session parameter (that is, the first parameter) required by the UE #A.

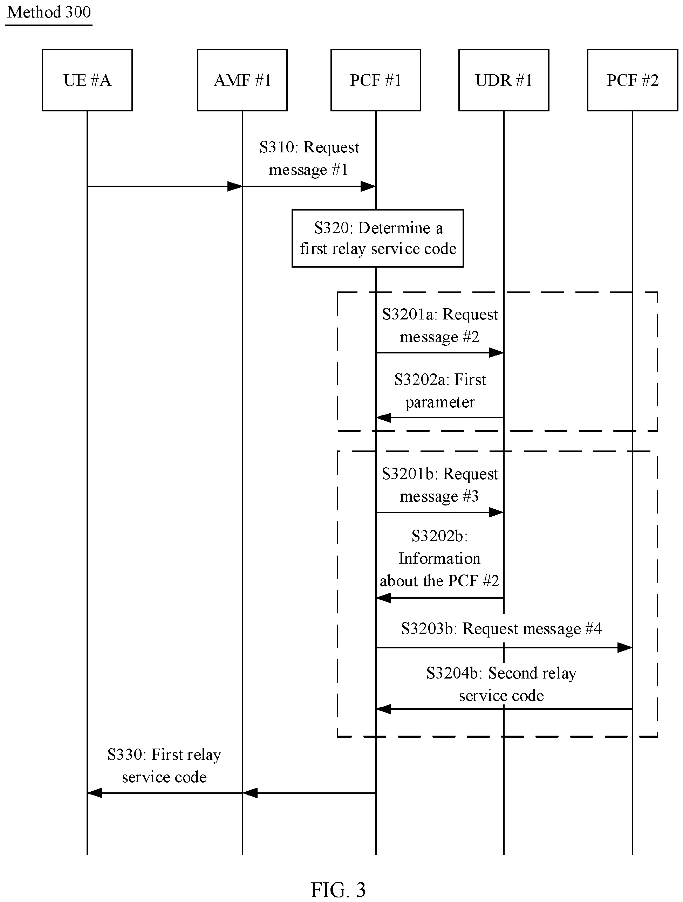

FIG. 3 is a schematic flowchart of a method for obtaining a first relay service code by a first terminal device (UE #A shown in the figure). An AMF #1, a PCF #1, and a UDR #1 shown in the figure all provide services for the UE #A, and a PCF #2 provides a service for a second terminal device (not shown in the figure). As shown in FIG. 3, the method 300 includes S310 to S330. The following describes each step in detail.

S310: The UE #A sends a request message #1 (an example of the first request message) to the PCF #1 (an example of the first policy control function network element) via the AMF #1 (an example of the access and mobility management function network element).

The request message #1 requests to obtain a first relay service code.

A method for sending the request message #1 by the UE #A to the PCF #1 via the AMF #1 may be as follows:

### Method 1:

The UE #A first sends a registration request message to the AMF #1, and the registration request message may include one or more of the following information: identification information of the UE #A and an identifier of a first application.

The identification information of the UE #A may be a subscription concealed identifier (subscriber concealed identifier, SUCI) or a globally unique temporary identity (globally unique temporary identity, GUTI). The identification information of the UE #A is used to identify the UE #A, and is used by the AMF #1 to obtain a subscription permanent identifier (subscriber permanent identifier, SUPI) through mapping.

The identifier of the first application indicates an application to be initiated by the UE #A.

Optionally, the registration request message may further include downgrade indication information, and the downgrade indication information indicates whether the UE #A accepts service downgrade. The service downgrade may be understood as session parameter downgrade, for example, whether the UE #A accepts access to the first application by using a session parameter with a low priority.

In an example, if the downgrade indication information indicates that the UE #A does not accept service downgrade, it indicates that the UE #A allows for access to the first application only by using a session parameter required by the UE #A.

In another example, if the downgrade indication information indicates that the UE #A accepts service downgrade, it indicates that the UE #A may allow for access to the first application by using a session parameter whose priority is lower than that of a session parameter required by the UE #A. For example, the UE #A is currently located in an area without carrier network coverage. To access a carrier network as much as possible, the UE #A may allow for access to the first application by using a parameter with a low priority, for example, a DNN, S-NASSI, an SSC mode, or a PDU session type.

Then, after receiving the registration request message from the UE #A, the AMF #1 sends a request message #1 to the PCF #1.

A specific form of the request message #1 is not limited in embodiments of this application. For example, if the registration request message received by the AMF #1 is an initial registration request message, that is, a user policy association has not been established between the AMF #1 and the PCF #1, the request message #1 may be a user policy association establishment request message. For another example, if the registration request message received by the AMF #1 is a registration request message sent by the UE #A due to location update, or a registration request message periodically sent by the UE #A, that is, a user policy association between the AMF #1 and the PCF #1 is still in an active state, the request message #1 may be a user policy association update request message.

The request message #1 may include the following information: identification information of the UE #A and an identifier of a first application. The identification information of the UE #A is an SUPI.

Optionally, the request message #1 may further include downgrade indication information.

It may be understood that content of the request message #1 may correspond to the content of the registration request message. For example, if the registration request message includes the identification information of the UE #A and the identifier of the first application, the request message #1 also includes the identification information of the UE #A and the identifier of the first application. For another example, if the registration request message includes the identification information of the UE #A, the identifier of the first application, and the downgrade indication information, the request message #1 also includes the identification information of the UE #A, the identifier of the first application, and the downgrade indication information.

### Method 2:

The UE #A first sends a proximity-based services (proximity based service, ProSe) discovery request message to the AMF #1, and the ProSe discovery request message may include one or more of the following information: identification information of the UE #A, a request type, and an identifier of a first application.

The identification information of the UE #A may be an SUCI or a GUTI. The identification information of the UE #A is used to identify the UE #A, and is used by the AMF #1 to obtain an SUPI through mapping.

The identifier of the first application indicates an application to be initiated by the UE #A.

The request type indicates whether the UE #A requests to serve as a relay UE node or a remote UE node.

Optionally, the registration request message may further include downgrade indication information, and the downgrade indication information indicates whether the UE #A accepts service downgrade. The service downgrade may be understood as session parameter downgrade, for example, whether the UE #A accepts access to the first application by using a session parameter with a low priority.

In an example, if the downgrade indication information indicates that the UE #A does not accept service downgrade, it indicates that the UE #A is allowed to access the first application only by using a session parameter required by the UE #A.

In another example, if the downgrade indication information indicates that the UE #A accepts service downgrade, it indicates that the UE #A may allow for access to the first application by using a session parameter whose priority is lower than that of a session parameter required by the UE #A. For example, the UE #A is currently located in an area without carrier network coverage. To access a carrier network as much as possible, the UE #A may allow for access to the first application by using a parameter with a low priority, for example, a DNN, S-NASSI, an SSC mode, or a PDU session type.

Then, after receiving the ProSe discovery request message from the UE #A, the AMF #1 sends a request message #1 to the PCF #1.

The request message #1 may include the following information: identification information of the UE #A, an identifier of a first application, and a request type. The identification information of the UE #A is an SUPI, and the identification information may be obtained by the AMF #1 through mapping based on an SUCI or a GUTI.

Optionally, the request message #1 may further include downgrade indication information.

It may be understood that content of the request message #1 may correspond to the content of the ProSe discovery request message. For example, if the ProSe discovery request message includes the identification information of the UE #A and the identifier of the first application, the request message #1 also includes the identification information of the UE #A and the identifier of the first application. For another example, if the ProSe discovery request message includes the identification information of the UE #A, the identifier of the first application, and the downgrade indication information, the request message #1 also includes the identification information of the UE #A, the identifier of the first application, and the downgrade indication information.

S320: The PCF #1 determines the first relay service code.

A method for determining the first relay service code by the PCF #1 is not limited in embodiments of this application.

In an implementation, the PCF #1 may determine the first relay service code based on a first parameter. The first relay service code may correspond to the relay service code #2 described above.

The first parameter is a parameter for accessing the first application, that is, the first parameter is a parameter that needs to be used by the UE #A to access the first application, or a parameter that is allowed to be used by the UE #A to access the first application. In other words, the first parameter is a parameter in route selection descriptor information in a URSP rule configured by a carrier for an application of the UE #A that supports a relay service. The first parameter may be one or more of parameters in the route selection descriptor information: a DNN, S-NAASI, an SSC mode, a PDU session type, an access mode priority, a non-3GPP offloading indication, and the like.

In an example, the PCF #1 may perform a hash operation on a code corresponding to the first parameter, to obtain the first relay service code.

In another example, the PCF #1 may perform key-based encryption on a code corresponding to the first parameter, to obtain the first relay service code.

In another implementation, the PCF #1 may determine the first relay service code based on the first parameter and the following information: subscription information of the UE #A and an identifier of the first application. The first relay service code may correspond to the relay service code #2 described above.

Similarly, the PCF #1 may perform a hash operation or key-based encryption on both a code corresponding to the first parameter and a code corresponding to the foregoing information, to obtain the first relay service code.

In still another implementation, the PCF #1 may determine the first relay service code based on the first parameter and the following information: subscription information of the UE #A, an identifier of the first application, and downgrade indication information. The first relay service code may correspond to the relay service code #2 described above.

If the downgrade indication information indicates that the UE #A does not accept service downgrade, the PCF #1 may perform a hash operation or key-based encryption on both a code corresponding to the first parameter and a code corresponding to the foregoing information.

If the downgrade indication information indicates that the UE #A accepts service downgrade, the PCF #1 may perform a hash operation or key-based encryption on a code corresponding to a session parameter whose priority is lower than that of the first parameter and a code corresponding to the foregoing information.

In embodiments of this application, the hash operation and key encryption are merely used as examples to describe the method for determining the first relay service code by the PCF #1. It may be understood that the PCF #1 may alternatively determine the first relay service code in another coding manner. This is not limited in embodiments of this application.

It may be understood that, if the PCF #1 does not store the first parameter, the PCF #1 may obtain the first parameter from the UDR #1 (an example of the data management repository network element), or may obtain a URSP rule or route selection descriptor information that corresponds to the first application, to obtain the first parameter from the URSP rule or the route selection descriptor information.

S3201a: The PCF #1 sends a request message #2 to the UDR #1.

The request message #2 requests to obtain the first parameter, or requests to obtain a URSP rule corresponding to the first application, or requests to obtain route selection descriptor information.

Optionally, the request message #2 further requests to verify whether the UE #A is allowed to use a first service.

Optionally, if the request message #1 received by the PCF #1 includes a request type, the request message #2 further requests to verify whether the UE #A is allowed to serve as a relay UE node or a remote UE node.

The request message #2 includes the following information: identification information of the UE #A and an identifier of the first application.

It may be understood that, regardless of whether the request message #2 requests to obtain the first parameter, or requests the URSP rule or the route selection descriptor information, the UDR #1 first obtains, based on the request message #2, the URSP rule configured by the carrier for the first application of the UE #A. Further, if the request message #2 requests to obtain the route selection descriptor information, the UDR #1 may obtain the route selection descriptor information from the URSP rule. If the request message #2 requests to obtain the first parameter, the UDR #1 may first obtain the route selection descriptor information from the URSP rule, and then obtain the first parameter from the route selection descriptor information.

Optionally, the UDR #1 may further obtain subscription information of the UE #A.

S3202a: The UDR #1 sends the first parameter to the PCF #1.

Optionally, the UDR #1 may further send the subscription information of the UE #A to the PCF #1.

In still another implementation, the PCF #1 may determine the first relay service code based on a second relay service code from the PCF #2. If the second relay service code includes information about a second parameter, the first relay service code determined by the PCF #1 based on the second relay service code corresponds to the relay service code #2 described above. If the second relay service code does not include the information about the second parameter, the first relay service code determined by the PCF #1 based on the second relay service code corresponds to the relay service code #3 described above.

In an example, the PCF #1 may determine the second relay service code as the first relay service code without processing the second relay service code.

In another example, the PCF #1 may process the second relay service code to obtain the first relay service code. For example, the PCF #1 may determine a prefix of the second relay service code as the first relay service code. For another example, the PCF #1 may generate the first relay service code based on the second relay service code, and the first relay service code corresponds to the second relay service code.

It may be understood that, if the PCF #1 does not store the second relay service code, the PCF #1 may obtain the second relay service code from the PCF #2.

S3201b: The PCF #1 sends a request message #3 (an example of the third request message) to the UDR #1. The request message #2 requests to obtain information about the PCF #2.

S3202b: The UDR #1 sends the information about the PCF #2 to the PCF #1.

In an example, after receiving the request message #3 from the PCF #1, the UDR #1 may send, to the PCF #1, identification information of a visited public land mobile network (public land mobile network, PLMN) in which the UE #A is located and/or identification information of a neighboring PLMN. Then, the PCF #1 searches for the information about the PCF #2 in the visited PLMN and/or the neighboring PLMN based on the identification information of the visited PLMN and/or the identification information of the neighboring PLMN

In another example, the UDR #1 may alternatively directly add identification information of a visited PLMN and/or identification information of a neighboring PLMN, and the information about the PCF #2 in the visited PLMN and/or the neighboring PLMN to a response message sent to the PCF #1.

It may be understood that there may be a plurality of PLMNs neighboring to the PLMN in which the UE #A is located, or there may be a plurality of PCFs #2 in each of the PLMN in which the UE #A is located and the neighboring PLMN. Correspondingly, the UDR #1 may obtain information about the plurality of PCFs #2.

Then, the UDR #1 sends the information about the plurality of PCFs #2 and/or identification information of the plurality of PLMNs to the PCF #1.

If the PCF #1 receives the identification information of the visited PLMN and/or the identification information of the neighboring PLMN, the PCF #1 may further search for the information about the PCF #2 in the visited PLMN and/or the neighboring PLMN by using a network repository function (network repository function, NRF) network element.

S3203b: The PCF #1 sends a request message #4 (an example of the second request message) to the PCF #2. The request message #4 requests to obtain the second relay service code.

The request message #4 includes the following information: the first parameter and an identifier of the first application.

Optionally, the request message #4 may further include identification information of the UE #A.

Optionally, the request message #4 may further include downgrade indication information.

It may be understood that the PCF #1 may receive information about a plurality of PCFs #2. Therefore, the PCF #1 sends the request message #4 to each PCF #2.

S3204b: The PCF #2 sends the second relay service code to the PCF #1.

After receiving the request message #4, the PCF #2 first determines whether the UE #B served by the PCF #2 supports accessing the first application by using the first parameter. For example, the PCF #2 determines whether a session parameter in a URSP rule configured by the carrier for the UE #B is the same as or equivalent to the first parameter, and if yes, the PCF #2 determines that the UE #B served by the PCF #2 supports accessing the first application by using the first parameter. Then, the PCF #2 sends, to the PCF #1, the second relay service code determined by the PCF #2 for the UE #B. For another example, the PCF #2 may further determine, based on a locally stored relay service code list, a second relay service code that can provide a relay service for accessing the first application by using the first parameter, and send one or more second relay service codes that meet a condition to the PCF #1.

Optionally, if the request message #4 further includes identification information of the UE #A, the PCF #2 may further determine whether the UE #B served by the PCF #2 is allowed to provide a relay service for the UE #A. If yes, the PCF #2 sends, to the PCF #1, the second relay service code determined by the PCF #2 for the UE #B.

Optionally, if the request message #4 further includes downgrade indication information, when the PCF #2 determines that a priority of the session parameter in the URSP rule configured by the carrier for the UE #B is lower than that of the first parameter, the second relay service code determined by the PCF #2 for the UE #B may also be sent to the PCF #1. Optionally, the PCF #2 may further determine, based on a locally stored relay service code list, a second relay service code that can provide a relay service for accessing the first application by using a second parameter obtained after the first parameter is downgraded, and send one or more second relay service codes that meet a condition to the PCF #1.

In still another implementation, the PCF #1 may determine the first relay service code based on the following information: subscription information of the UE #A and an identifier of the first application. The first relay service code may correspond to the relay service code #1 described above.

The PCF #1 may perform a hash operation or key-based encryption on a code corresponding to the foregoing information, to obtain the first relay service code.

S330: The PCF #1 sends the first relay service code to the UE #A via the AMF #1.

The PCF #1 may first send a response message to the AMF #1, and the response message includes the first relay service code. Then, the AMF #1 sends the first relay service code to the UE #A.

Optionally, the response message sent by the PCF #1 to the AMF #1 may further include an identifier of the first application. Correspondingly, a message sent by the AMF #1 to the UE #A may also include an identifier of the first application.

Optionally, the response message sent by the PCF #1 to the AMF #1 may further include a radio parameter corresponding to a first broadcast message sent by the UE #A, for example, information about a frequency band, an applicable geographic area of the frequency band, and an effective time. Correspondingly, a message sent by the AMF #1 to the UE #A may also include information such as a radio parameter and an effective time.

In embodiments of this application, the PCF #1 may assign the first relay service code that includes information about the first parameter to the UE #A based on a request of the UE #A. Further, the UE #B that matches the UE #A based on the first relay service code may provide a relay service required by the UE #A. Alternatively, the PCF #1 may further assign the first relay service code associated with the UE #B to the UE #A, and the UE #B corresponding to the first relay service code may provide a relay service required by the UE #A. Therefore, the UE #B that matches the UE #A based on the first relay service code can meet a requirement of the UE #A.

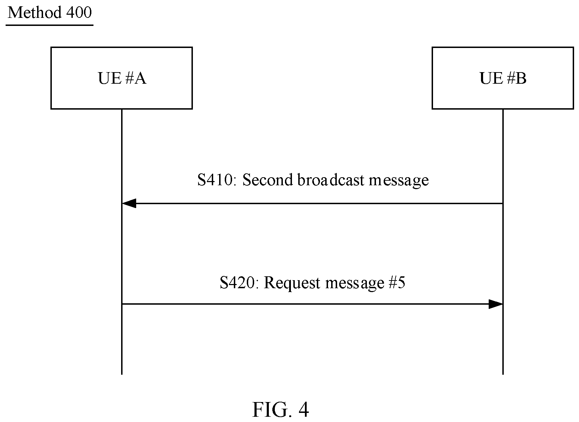

FIG. 4 is a schematic flowchart of a connection establishment method according to an embodiment of this application. The method shown in FIG. 4 may be performed by the UE #A and the UE #B in the system shown in FIG. 1. The UE #A corresponds to a first terminal device, and the UE #B corresponds to a second terminal device. A method for establishing a connection between the UE #A and the UE #B described in the method 200 corresponds to the mode A, that is, relay UE sends a broadcast message. As shown in FIG. 4, the method includes S410 and S420. The following describes each step in detail.

S410: The UE #B sends a second broadcast message.

The UE #B may send the second broadcast message on a corresponding frequency band based on frequency information received from a policy control function network element serving the UE #B. Correspondingly, the UE #A may receive the second broadcast message on the corresponding frequency band based on the frequency information received from a policy control function network element serving the UE #A.

The second broadcast message is used to be discovered by the UE #A that requires a relay service.

Specific content of the second broadcast message is not limited in embodiments of this application.

In an implementation, the broadcast message may include the following information: information about the UE #B, a relay service code #4 (an example of the second relay service code), and a second parameter.

The information about the UE #B is used to identify the UE #B, and may include a link layer identifier of the UE #B or application layer user information of the UE #B.

The relay service code #4 is associated with a second application, the second application is an application of the UE #B that supports a relay service, and the relay service code #4 may include information about the second application. Optionally, the relay service code #4 may further include a relay service security policy of the UE #B.

The relay service code #4 may be locally preconfigured by the UE #B, or may be obtained by the UE #B from the policy control function network element serving the UE #B. This is not limited in embodiments of this application. The following describes, with reference to another embodiment, a method for obtaining the relay service code #4 by the UE #B from the policy control function network element serving the UE #B. For brevity, details are not described herein.

The second parameter is a parameter for accessing the second application, that is, the second parameter is a parameter that needs to be used by the UE #B to access the second application, or a parameter that is allowed to be used by the UE #B to access the second application. In other words, the second parameter is a parameter in route selection descriptor information in a URSP rule configured by a carrier for an application of the UE #B that supports a relay service. The second parameter may be one or more of parameters in the route selection descriptor information: a DNN, S-NAASI, an SSC mode, a PDU session type, an access mode priority, a non-3GPP offloading indication, and the like.

The second parameter may be obtained by the UE #B from the policy control function network element serving the UE #B.

In another implementation, the broadcast message may include the following information: information about the UE #B and a relay service code #5.

The information about the UE #B is used to identify the UE #B, and may include a link layer identifier of the UE #B or application layer user information of the UE #B.

The relay service code #5 includes information about a second parameter. That the relay service code #5 includes information about a second parameter may be understood as that the relay service code #5 includes a code corresponding to the second parameter, or the relay service code #5 includes the second parameter. In other words, the second parameter may be obtained from the relay service code #5 through parsing.

A specific form of the relay service code #5 is not limited in embodiments of this application.

In an example, the relay service code #5 is associated with a second application, which may also be understood as that the relay service code #5 is associated with the UE #B. In this case, the relay service code #5 may include information about the second application. Optionally, the relay service code #5 may further include a relay service security policy of the UE #B.

In another example, the relay service code #5 is associated with a first application, and the first application is an application to be initiated by the UE #A, which may also be understood as that the relay service code #5 is associated with the UE #A. In this case, the relay service code #5 may further include information about the first application. Optionally, the relay service code #5 may further include a relay service security policy of the UE #A.

The relay service code #5 may be obtained by the UE #B from the policy control function network element serving the UE #B. The following describes in detail, with reference to another embodiment, a method for obtaining the relay service code #5 by the UE #B from the policy control function network element serving the UE #B. For brevity, details are not described herein.

In still another implementation, the first broadcast message may include the following information: information about the UE #B and a relay service code #6 (an example of the second relay service code).

The information about the UE #B is used to identify the UE #B, and may include a link layer identifier of the UE #B or application layer user information of the UE #B.

The relay service code #6 is associated with a first application, which may also be understood as that the relay service code #6 is associated with the UE #A. In addition, the UE #B can provide a relay service for the UE #A corresponding to the relay service code #6. In other words, the relay service code #6 is an available relay service code. The relay service code #6 may include information about the first application. Optionally, the relay service code #6 may further include a relay service security policy of the UE #A.

The relay service code #6 may be obtained by the UE #B from the policy control function network element serving the UE #B. The following describes in detail, with reference to another embodiment, a method for obtaining the relay service code #6 by the UE #B from the policy control function network element serving the UE #B. For brevity, details are not described herein.

In still another implementation, the first broadcast message may include the following information: information about the UE #B and a relay service code #4 (an example of the second relay service code).

The information about the UE #B is used to identify the UE #B, and may include a link layer identifier of the UE #B or application layer user information of the UE #B.

The relay service code #4 is associated with a second application, and the relay service code #4 may include information about the second application. Optionally, the relay service code #4 may further include a relay service security policy of the UE #B.

The relay service code #4 may be locally preconfigured by the UE #B, or may be obtained by the UE #B from the policy control function network element serving the UE #B. This is not limited in embodiments of this application. The following describes, with reference to another embodiment, a method for obtaining the relay service code #1 by the UE #B from the policy control function network element serving the UE #B. For brevity, details are not described herein.

S420: The UE #A sends a request message #5 (an example of the fourth request message) to the UE #B.

The request message #5 requests to establish a PC5 connection to the UE #B.

As described above, the second broadcast message sent by the UE #B may include different content.

In an implementation, the first broadcast message sent by the UE #B includes the following information: information about the UE #B, a relay service code #4 (an example of the second relay service code), and a second parameter.

In this case, after receiving the second broadcast message sent by the UE #B, the UE #A first parses the relay service code #4 in the second broadcast message, to determine whether the UE #B can provide a relay service of the application to be initiated by the UE #A.

That the UE #A parses the relay service code #4 in the second broadcast message may be understood as that the UE #A determines whether the relay service code #4 in the second broadcast message is the same as or equivalent to a relay service code #1 (an example of the first relay service code) stored in the UE #A, or whether peer information can be obtained by using a specific encryption/decryption algorithm for the relay service code #1 and the relay service code #4, for example, whether the UE #A can obtain a same application identifier by using a specific decryption algorithm for the relay service code #1 and the relay service code #4. For another example, the relay service code #1 configured by the UE #A may alternatively be a filter of a target relay service code. The UE #A may determine, based on the filter, whether the relay service code #4 meets a requirement of the filter, that is, whether the UE #B corresponding to the relay service code #4 can provide, for the UE #A, the relay service of the application to be initiated by the UE #A.

The relay service code #1 is associated with a first application, which may also be understood as that the relay service code #1 is associated with the UE #A. The relay service code #1 is a relay service code stored in the UE #A, and may be locally preconfigured by the UE #A, or may be obtained by the UE #A from the policy control function network element serving the UE #A. This is not limited in embodiments of this application. For a method for obtaining the relay service code #1 by the UE #A from the policy control function network element serving the UE #A, refer to the method for obtaining the relay service code #4 by the UE #B. For brevity, details are not described in embodiments of this application.

If the UE #A determines that the relay service code #1 is the same as or equivalent to the relay service code #4, or the peer information can be obtained by using the specific encryption/decryption algorithm, the UE #A continues to determine whether the second parameter is consistent with or equivalent to a first parameter, and the first parameter is a parameter for accessing a first application.

If the UE #A determines that the second parameter is consistent with or equivalent to the first parameter, the UE #A determines that the UE #B can provide a relay service of the first application. Then, the UE #A may send a request message #5 to the UE #B.

Optionally, if the first parameter includes a plurality of parameters, when determining that at least one parameter in the second parameter is consistent with or equivalent to a parameter in the first parameter, the UE #A may determine that the UE #A can provide the relay service of the first application. For example, it is assumed that the second parameter includes a DNN and S-NAASI. In this case, when determining that the DNN in the second parameter is consistent with or equivalent to a DNN in the first parameter, the UE #A determines that the UE #B can provide the relay service of the first application. Alternatively, when determining that the S-NASSI in the second parameter is consistent with or equivalent to S-NASSI in the first parameter, the UE #A determines that the UE #B can provide the relay service of the first application. Alternatively, when determining that the DNN and the S-NASII in the second parameter are the same as or equivalent to a DNN and S-NASSI in the first parameter, the UE #A determines that the UE #B can provide the relay service of the first application.

In another implementation, the second broadcast message sent by the UE #B includes the following information: information about the UE #B and a relay service code #5 (an example of the second relay service code).

In this case, after receiving the second broadcast message sent by the UE #B, the UE #A may parse the relay service code #5 in the second broadcast message, to determine whether the UE #B can provide a relay service of the first application.

In an example, when the relay service code #5 is associated with a second application, that the UE #A parses the relay service code #5 in the second broadcast message may be understood as that the UE #A determines whether the relay service code #5 is the same as or equivalent to a relay service code #2 obtained by the UE #A in advance, which may also be understood as that the UE #A obtains information about a second parameter that is included in the relay service code #5.

If the UE #A learns of a method for configuring the relay service code #5 by the policy control function network element serving the UE #B for the UE #B, the UE #A may successfully parse the relay service code #5. For example, if a method for configuring the relay service code #2 (an example of the first relay service code) by the policy control function network element serving the UE #A for the UE #A is the same as the method for configuring the relay service code #5 by the policy control function network element serving the UE #B for the UE #B, the UE #A may learn of the method for configuring the relay service code #5 by the policy control function network element serving the UE #B for the UE #B. The relay service code #2 is associated with the first application. Alternatively, the UE #A may obtain the information about the second parameter in the relay service code #5 by using a specific encryption/decryption algorithm for the relay service code #5. The foregoing describes, by using an example, the method for parsing the relay service code #5 by the UE #A. This should not impose a limitation on embodiments of this application.

Further, if the UE #A can successfully parse the relay service code #5, that is, can successfully obtain the information about the second parameter that is included in the relay service code #5, the UE #A determines whether the second parameter is consistent with or equivalent to a first parameter.

If the UE #A determines that the second parameter is consistent with or equivalent to the first parameter, the UE #A determines that the UE #B can provide the relay service of the first application. Then, the UE #A may send a request message #5 to the UE #B.

Optionally, if the second parameter includes a plurality of parameters, when determining that at least one parameter in the second parameter is consistent with or equivalent to a parameter in the first parameter, the UE #A may determine that the UE #A can provide the relay service of the first application. For example, it is assumed that the second parameter includes a DNN and S-NAASI. In this case, when determining that the DNN in the second parameter is consistent with or equivalent to a DNN in the first parameter, the UE #A determines that the UE #B can provide the relay service of the first application. Alternatively, when determining that the S-NASSI in the second parameter is consistent with or equivalent to S-NASSI in the first parameter, the UE #A determines that the UE #B can provide the relay service of the first application. Alternatively, when determining that the DNN and the S-NASII in the second parameter are the same as or equivalent to a DNN and S-NASSI in the first parameter, the UE #A determines that the UE #B can provide the relay service of the first application.

In another example, when the relay service code #5 is associated with a second application, that the UE #A parses the relay service code #5 in the second broadcast message may be understood as that the UE #A determines whether the relay service code #5 is the same as or equivalent to a relay service code #2 obtained by the UE #A in advance. For example, the UE #A may determine, based on whether a prefix of the relay service code #2 is the same as or equivalent to that of the relay service code #5, whether the relay service code #2 is the same as or equivalent to the relay service code #5. The UE #B corresponding to the relay service code #2 can provide a relay service for the UE #A, that is, supports accessing the first application by using the first parameter. The relay service code #2 is associated with the second application.

Therefore, if the UE #A determines that the relay service code #5 in the second broadcast message is the same as or equivalent to the relay service code #2 stored in the UE #A, the UE #A may determine that the UE #B can provide the relay service of the first application, that is, supports accessing the first application by using the first parameter. Then, the UE #A may send a request message #5 to the UE #B.

Optionally, the UE #A stores a plurality of relay service codes #2. If the relay service code #5 is the same as or equivalent to one of the relay service codes #2, the UE #A may determine that the UE #B can provide the relay service of the first application.

In another example, when the relay service code #5 is associated with the first application, that the UE #A parses the relay service code #5 in the second broadcast message may be understood as that the UE #A determines whether the relay service code #5 is the same as or equivalent to a relay service code #2 stored in the UE #A. For example, the UE #A may determine, based on whether a prefix of the relay service code #2 is the same as or equivalent to that of the relay service code #5, whether the relay service code #2 is the same as or equivalent to the relay service code #5. The relay service code #2 is associated with the first application.

If the UE #A determines that the relay service code #5 is the same as or equivalent to the relay service code #2, the UE #A determines that the UE #B can provide the relay service of the first application, that is, supports accessing the first application by using the first parameter. Then, the UE #A may send a request message #5 to the UE #B.

In still another implementation, the broadcast message may further include the following information: information about the UE #A and a relay service code #6 (an example of the second relay service code).

In this case, after receiving the second broadcast message sent by the UE #B, the UE #A first parses the relay service code #6 in the second broadcast message, to determine whether the UE #B can provide a relay service of the first application.

That the UE #A parses the relay service code #6 may be understood as that the UE #A determines whether the relay service code #6 is the same as or equivalent to a relay service code #1 (an example of the first relay service code) stored in the UE #A. For example, the UE #A may determine, based on whether a prefix of the relay service code #6 is the same as or equivalent to that of the relay service code #1, whether the relay service code #1 is the same as or equivalent to the relay service code #6. The relay service code #1 is associated with the first application.

If the UE #A determines that the relay service code #6 is the same as or equivalent to the relay service code #1, the UE #A determines that the UE #B can provide the relay service of the first application, that is, supports accessing the first application by using the first parameter. Then, the UE #A may send a request message #5 to the UE #B.

In still another implementation, the broadcast message may further include the following information: information about the UE #A and a relay service code #4 (an example of the second relay service code).

In this case, after receiving the second broadcast message sent by the UE #B, the UE #A first parses the relay service code #4 in the second broadcast message, to determine whether the UE #B can provide a relay service of the first application.

That the UE #A parses the relay service code #4 may be understood as that the UE #A determines whether the relay service code #4 is the same as or equivalent to a relay service code #3 (an example of the first relay service code) stored in the UE #A. For example, the UE #A may determine, based on whether a prefix of the relay service code #3 is the same as or equivalent to that of the relay service code #4, whether the relay service code #3 is the same as or equivalent to the relay service code #4. The relay service code #3 is associated with a second application.

If the UE #A determines that the relay service code #4 is the same as or equivalent to the relay service code #3, the UE #A determines that the UE #B can provide the relay service of the first application, that is, supports accessing the first application by using the first parameter. Then, the UE #A may send a request message #5 to the UE #B.

Optionally, the UE #A stores a plurality of relay service codes #3. If the relay service code #4 is the same as or equivalent to one of the relay service codes #3, the UE #A may determine that the UE #B can provide the relay service of the first application.

Further, after the UE #A establishes the PC5 connection to the UE #B, if the UE #B determines that there is no locally available PDU session, the UE #B performs URSP match based on an identifier of the first application, and initiates a PDU session establishment procedure based on a list of route selection descriptors in the matched URSP rule. One or more of parameters such as a DNN, S-NSSAI, an SSC mode, and a PDU session type that are requested by a PDU session establishment request are consistent with or equivalent to a session parameter required by the UE #A.

In embodiments of this application, the second broadcast message sent by the UE #B may include the second parameter, or the second relay service code may include the information about the second parameter, or the second broadcast message sent by the UE #B may include the available relay service code obtained from the policy control function network element. Therefore, the UE #B may provide the UE #A with the relay service required by the UE #A that matches the UE #B based on the second broadcast message, that is, the UE #B may access, by using the session parameter required by the UE #A, the application to be initiated by the UE #A.

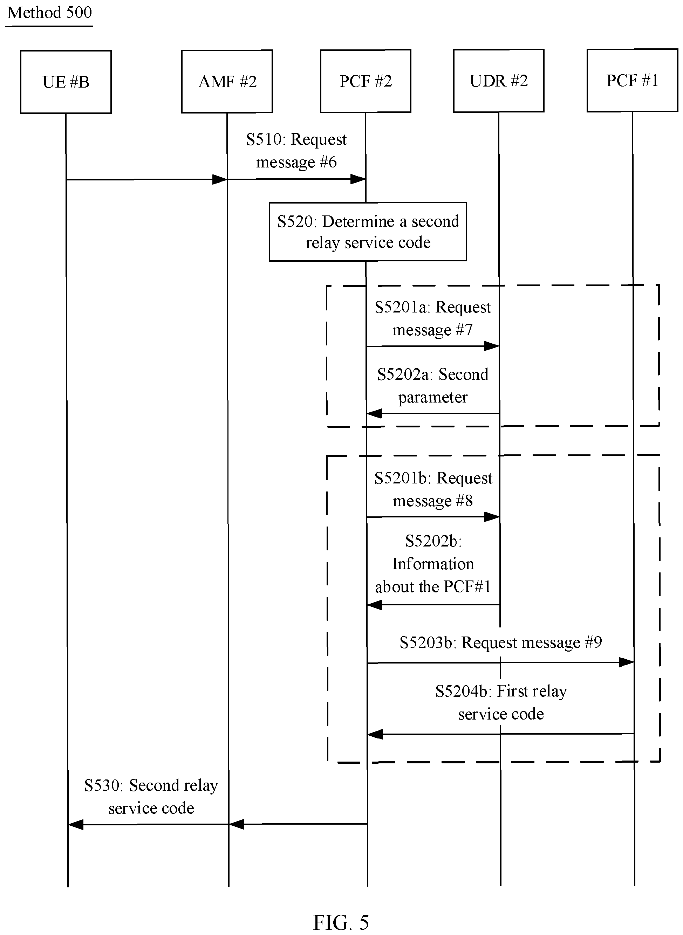

FIG. 5 is a schematic flowchart of a method for obtaining a second relay service code by a second terminal device (UE #B shown in the figure). An AMF #2, a PCF #2, and a UDR #2 shown in the figure all provide services for the UE #B, and a PCF #1 provides a service for a first terminal device (not shown in the figure). As shown in FIG. 5, the method 500 includes S510 to S530. The following describes each step in detail.

S510: The UE #B sends a request message #6 (an example of the fifth request message) to the PCF #2 (an example of the second policy control function network element) via the AMF #2 (an example of the access and mobility management function network element).

The request message #6 requests to obtain the second relay service code.

A method for sending the request message #6 by the UE #B to the PCF #2 via the AMF #2 may be as follows:

### Method 1:

The UE #B first sends a registration request message to the AMF #2, and the registration request message may include one or more of the following information: identification information of the UE #B and an identifier of a second application.

The identification information of the UE #B may be an SUCI or a GUTI. The identification information of the UE #B is used to identify the UE #B, and is used by the AMF #2 to obtain an SUPI through mapping.

The identifier of the first application indicates an application of the UE #B that supports a relay service.

Then, after receiving the registration request message from the UE #B, the AMF #2 sends a request message #6 to the PCF #2.

A specific form of the request message #6 is not limited in embodiments of this application. For example, if the registration request message received by the AMF #2 is an initial registration request message, that is, a user policy association has not been established between the AMF #2 and the PCF #2, the request message #6 may be a user policy association establishment request message. For another example, if the registration request message received by the AMF #2 is a registration request message sent by the UE #B due to location update, or a registration request message periodically sent by the UE #B, that is, a user policy association between the AMF #2 and the PCF #2 is still in an active state, the request message #6 may be a user policy association update request message.

The request message #6 may include the following information: identification information of the UE #B and an identifier of a second application. The identification information of the UE #B is an SUPI.

It may be understood that content of the request message #6 may correspond to the content of the registration request message. For example, if the registration request message includes the identification information of the UE #B and the identifier of the second application, the request message #6 also includes the identification information of the UE #B and the identifier of the second application.

### Method 2:

The UE #B first sends a ProSe discovery request message to the AMF #2, and the ProSe discovery request message may include one or more of the following information: identification information of the UE #B, a request type, and an identifier of a second application.

The identification information of the UE #B may be an SUCI or a GUTI. The identification information of the UE #B is used to identify the UE #B, and is used by the AMF #2 to obtain an SUPI through mapping.

The identifier of the second application indicates an application of the UE #B that supports a relay service.

The request type indicates whether the UE #B requests to serve as a relay UE node or a remote UE node.

Then, after receiving the ProSe discovery request message from the UE #A, the AMF #2 sends a request message #6 to the PCF #2.

The request message #6 may include the following information: identification information of the UE #B, an identifier of a second application, and a request type. The identification information of the UE #B is an SUPI, and the identification information may be obtained by the AMF #2 through mapping based on an SUCI or a GUTI.

It may be understood that content of the request message #6 may correspond to the content of the ProSe discovery request message. For example, if the ProSe discovery request message includes the identification information of the UE #B and the identifier of the second application, the request message #6 also includes the identification information of the UE #B and the identifier of the second application.

S520: The PCF #2 determines the second relay service code.

A method for determining the second relay service code by the PCF #2 is not limited in embodiments of this application.

In an implementation, the PCF #2 may determine the second relay service code based on a second parameter. The second relay service code may correspond to the relay service code #5 described above.

The second parameter is a parameter for accessing the second application, that is, the second parameter is a parameter that needs to be used by the UE #B to access the second application, or a parameter that is allowed to be used by the UE #B to access the second application. In other words, the second parameter is a parameter in route selection descriptor information in a URSP rule configured by a carrier for an application of the UE #B that supports a relay service. The first parameter may be one or more of parameters in the route selection descriptor information: a DNN, S-NAASI, an SSC mode, a PDU session type, an access mode priority, a non-3GPP offloading indication, and the like.

In an example, the PCF #2 may perform a hash operation on a code corresponding to the second parameter, to obtain the second relay service code.

In another example, the PCF #2 may perform key-based encryption on a code corresponding to the second parameter, to obtain the second relay service code.

In another implementation, the PCF #2 may determine the second relay service code based on the second parameter and the following information: subscription information of the UE #B and an identifier of the second application. The second relay service code may correspond to the relay service code #5 described above.

Similarly, the PCF #2 may perform a hash operation or key-based encryption on both a code corresponding to the second parameter and a code corresponding to the foregoing information, to obtain the second relay service code.

In embodiments of this application, the hash operation and key encryption are merely used as examples to describe the method for determining the second relay service code by the PCF #2. It may be understood that the PCF #2 may alternatively determine the second relay service code in another coding manner. This is not limited in embodiments of this application.

It may be understood that, if the PCF #2 does not store the second parameter, the PCF #2 may obtain the second parameter from the UDR #2 (an example of the data management repository network element), or may obtain a URSP rule or route selection descriptor information that corresponds to the second application, to obtain the second parameter from the URSP rule or the route selection descriptor information.

S5201a: The PCF #2 sends a request message #7 to the UDR #2.

The request message #7 requests to obtain the second parameter, or requests to obtain a URSP rule corresponding to the second application, or requests to obtain route selection descriptor information.

Optionally, the request message #7 further requests to verify whether the UE #B is allowed to use the second application.

Optionally, if the request message #7 received by the PCF #2 includes a request type, the request message #7 further requests to verify whether the UE #B is allowed to serve as a relay UE node or a remote UE node.

The request message #7 includes the following information: identification information of the UE #B and an identifier of a second application.

It may be understood that, regardless of whether the request message #7 requests to obtain the second parameter, or requests the URSP rule or the route selection descriptor information, the UDR #2 first obtains, based on the request message #7, the URSP rule configured by the carrier for the second application of the UE #B. Further, if the request message #7 requests to obtain the route selection descriptor information, the UDR #2 may obtain the route selection descriptor information from the URSP rule. If the request message #7 requests to obtain the second parameter, the UDR #2 may first obtain the route selection descriptor information from the URSP rule, and then obtain the second parameter from the route selection descriptor information.

Optionally, the UDR #2 may further obtain subscription information of the UE #B.

S5202a: The UDR #2 sends the second parameter to the PCF #2.

Optionally, the UDR #2 may further send the subscription information of the UE #B to the PCF #2.

In still another implementation, the PCF #2 may determine the second relay service code based on a first relay service code from the PCF #1. If the first relay service code includes information about a first parameter, the second relay service code determined by the PCF #2 based on the first relay service code corresponds to the relay service code #5 described above. If the first relay service code does not include the information about the first parameter, the second relay service code determined by the PCF #2 based on the first relay service code corresponds to the relay service code #6 described above.

In an example, the PCF #2 may determine the first relay service code as the second relay service code without processing the first relay service code.

In another example, the PCF #2 may process the first relay service code to obtain the second relay service code. For example, the PCF #2 may determine a prefix of the first relay service code as the second relay service code. For another example, the PCF #2 may generate the second relay service code based on the first relay service code, and the second relay service code corresponds to the first relay service code.

It may be understood that, if the PCF #2 does not store the first relay service code, the PCF #2 may obtain the first relay service code from the PCF #1.

S5201b: The PCF #2 sends a request message #8 (an example of the seventh request message) to the UDR #2. The request message #8 requests to obtain information about the PCF #1.

S5202b: The UDR #2 sends the information about the PCF #1 to the PCF #2.

In an example, after receiving the request message #8 from the PCF #2, the UDR #2 may send, to the PCF #2, identification information of a visited PLMN in which the UE #B is located and/or identification information of a neighboring PLMN. Then, the PCF #2 searches for the information about the PCF #1 in the visited PLMN and/or the neighboring PLMN based on the identification information of the visited PLMN and/or the identification information of the neighboring PLMN

In another example, the UDR #2 may alternatively directly add identification information of a visited PLMN and/or identification information of a neighboring PLMN, and the information about the PCF #1 in the visited PLMN and/or the neighboring PLMN to a response message sent to the PCF #2.

It may be understood that there may be a plurality of PLMNs neighboring to the PLMN in which the UE #B is located, or there may be a plurality of PCFs #1 in each of the PLMN in which the UE #A is located and the neighboring PLMN. Correspondingly, the UDR #2 may obtain information about the plurality of PCFs #1.

Then, the UDR #2 sends the information about the plurality of PCFs #1 and/or identification information of the plurality of PLMNs to the PCF #2.

If the PCF #2 receives the identification information of the visited PLMN and/or the identification information of the neighboring PLMN, the PCF #2 may further search for the information about the PCF #1 in the visited PLMN and/or the neighboring PLMN by using an NRF network element.

S5203b: The PCF #2 sends a request message #9 (an example of the sixth request message) to the PCF #1. The request message #9 requests to obtain the first relay service code.

The request message #9 includes the following information: the second parameter and an identifier of the second application.

Optionally, the request message #9 may further include identification information of the UE #B.

It may be understood that the PCF #2 may receive information about a plurality of PCFs #1. Therefore, the PCF #2 sends the request message #9 to each PCF #1.

S5204b: The PCF #1 sends the first relay service code to the PCF #2.

After receiving the request message #9, the PCF #1 first determines whether the second parameter in the request message #9 is the same as or equivalent to the first parameter required by the UE #A served by the PCF #1, and if yes, the PCF #1 determines that the UE #B served by the PCF #2 can provide a relay service of the first application. Then, the PCF #1 sends, to the PCF #2, the first relay service code determined by the PCF #1 for the UE #A. For another example, the PCF #1 may further determine, based on a locally stored relay service code list, a first relay service code corresponding to a first parameter that is the same as or equivalent to the second parameter, and send one or more first relay service codes that meet a condition to the PCF #2.

Optionally, if the request message #9 further includes identification information of the UE #B, the PCF #1 may further determine whether the UE #A served by the PCF #1 is allowed to establish a connection to the UE #B. If yes, the PCF #1 sends, to the PCF #2, the first relay service code determined by the PCF #1 for the UE #A.

In still another implementation, the PCF #2 may determine the second relay service code based on the following information: subscription information of the UE #B and an identifier of the second application. The second relay service code may correspond to the relay service code #4 described above.

The PCF #2 may perform a hash operation or key-based encryption on a code corresponding to the foregoing information, to obtain the second relay service code.

S530: The PCF #2 sends the second relay service code to the UE #B via the AMF #2.

The PCF #2 may first send a response message to the AMF #2, and the response message includes the second relay service code. Then, the AMF #2 sends the second relay service code to the UE #B.

Optionally, the response message sent by the PCF #2 to the AMF #2 may further include an identifier of the second application. Correspondingly, a message sent by the AMF #2 to the UE #B may also include an identifier of the second application.

Optionally, the response message sent by the PCF #2 to the AMF #2 may further include a radio parameter corresponding to a second broadcast message sent by the UE #B, for example, information about a frequency band, an applicable geographic area of the frequency band, and an effective time. Correspondingly, a message sent by the AMF #2 to the UE #B may also include information such as a radio parameter and an effective time.

In embodiments of this application, the PCF #2 may assign the second relay service code that includes information about the second parameter to the UE #B based on a request of the UE #B. Further, the UE #B may provide a relay service for the UE #A that matches the UE #B based on the second relay service code. Alternatively, the PCF #2 may further assign the second relay service code associated with the UE #A to the UE #B, and the UE #B may provide a relay service for the UE #A corresponding to the second relay service code. Therefore, the UE #B can meet a requirement of the UE #A that matches the UE #B based on the second relay service code.

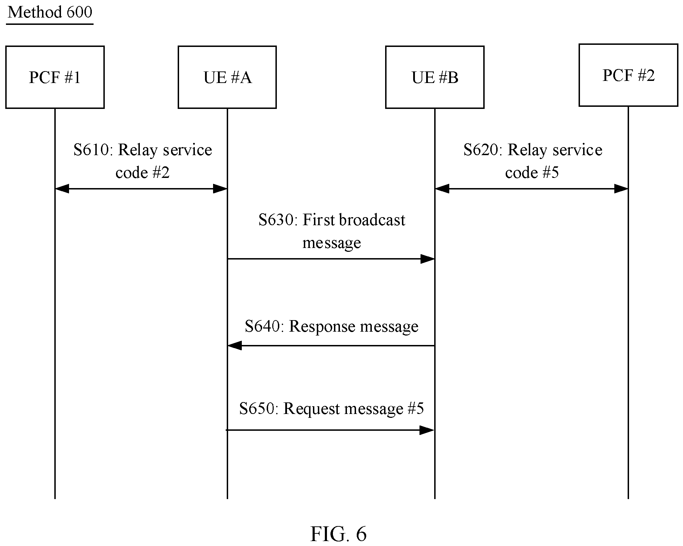

With reference to FIG. 6 to FIG. 9, the following describes a method for establishing a PC5 connection between remote UE and relay UE in the mode B. It should be noted that, in FIG. 6 to FIG. 9, UE #A corresponds to the remote UE, and a PCF #1 provides a service for the UE #A; and UE #B corresponds to the relay UE, and a PCF #2 provides a service for the UE #B.

FIG. 6 is a schematic flowchart of a connection establishment method according to an embodiment of this application. As shown in FIG. 6, the method includes S610 to S650. The following describes each step in detail.

S610: The UE #A obtains a relay service code #2 from the PCF #1.

The relay service code #2 includes information about a first parameter. For a method for obtaining the relay service code #2 by the UE #A, refer to the method 300. For brevity, details are not described herein again.

In an implementation, the relay service code #2 is associated with an application to be initiated by the UE #A, that is, associated with the UE #A.

In another implementation, the relay service code #2 is associated with an application of the UE #B that supports a relay service, that is, associated with the UE #B.

S620: The UE #B obtains a relay service code #5 from the PCF #2.

The relay service code #5 includes information about a second parameter. For a method for obtaining the relay service code #5 by the UE #B, refer to the method 500. For brevity, details are not described herein again.

In an implementation, the relay service code #5 is associated with an application of the UE #B that supports a relay service, that is, associated with the UE #B.

In another implementation, the relay service code #5 is associated with an application to be initiated by the UE #A, that is, associated with the UE #A.

S630: The UE #A sends a first broadcast message.

The first broadcast message includes a relay service code #2.

S640: The UE #B sends a response message to the UE #A.

The response message indicates that the UE #B supports accessing, by using the first parameter, the application to be initiated by the UE #A.

If the relay service code #2 included in the first broadcast message is associated with the application to be initiated by the UE #A, when the relay service code #5 obtained by the UE #B is associated with the application to be initiated by the UE #A or the application of the UE #B that supports a relay service, the UE #B may determine, based on whether the relay service code #2 is the same as or equivalent to the relay service code #5, whether the UE #B supports accessing, by using the first parameter, the application to be initiated by the UE #A. For a detailed determining method, refer to the method 200. For brevity, details are not described herein again.

If the relay service code #2 included in the first broadcast message is associated with the application of the UE #B that supports a relay service, when the relay service code #5 obtained by the UE #B is also associated with the application of the UE #B that supports a relay service, the UE #B may determine, based on whether the relay service code #2 is the same as or equivalent to the relay service code #5, whether the UE #B supports accessing, by using the first parameter, the application to be initiated by the UE #A. For a detailed determining method, refer to the method 200. For brevity, details are not described herein again.

S650: The UE #A sends a request message #5 to the UE #B.

The request message #5 requests to establish a PC5 connection to the UE #B.

It should be noted that a sequence of the steps in the method 600 is merely an example, and should not impose a limitation on embodiments of this application. For example, in the method 600, S620 may be performed before S610, or S610 and S630 may be performed before S620.

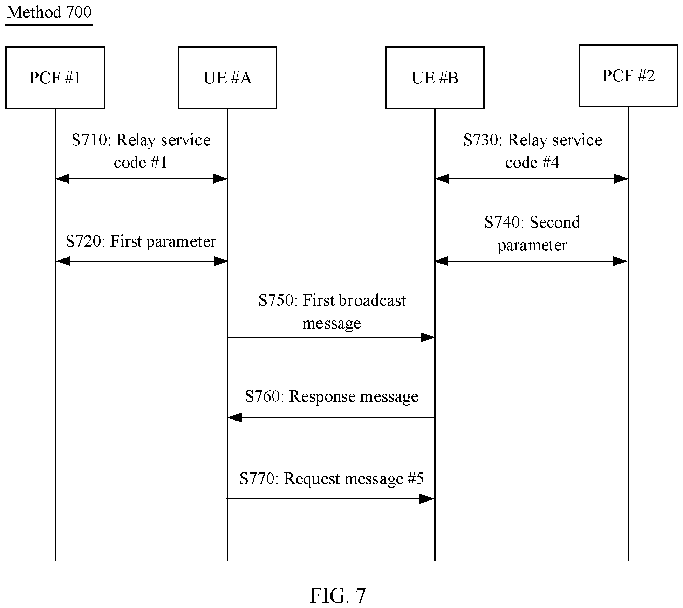

FIG. 7 is a schematic flowchart of a connection establishment method according to an embodiment of this application. As shown in FIG. 7, the method includes S710 to S770. The following describes each step in detail.

S710: The UE #A obtains a relay service code #1 from the PCF #1.

The relay service code #1 does not include information about a first parameter, and the relay service code #1 is associated with an application to be initiated by the UE #A, that is, associated with the UE #A. For a method for obtaining the relay service code #1 by the UE #A, refer to the method 300. For brevity, details are not described herein again.

If the relay service code #1 is locally preconfigured by the UE #A, S710 may not be performed.

S720: The UE #A obtains the first parameter from the PCF #1.

For a method for obtaining the first parameter by the UE #A, refer to the method 300. For brevity, details are not described herein again.

If the first parameter is locally stored in the UE #A, S720 may not be performed.

S730: The UE #B obtains a relay service code #4 from the PCF #2.

The relay service code #4 does not include information about a second parameter, and the relay service code #4 is associated with an application of the UE #B that supports a relay service, that is, associated with the UE #B. For a method for obtaining the relay service code #4 by the UE #A, refer to the method 500. For brevity, details are not described herein again.

If the relay service code #4 is locally preconfigured by the UE #B, S730 may not be performed.

S740: The UE #B obtains the second parameter from the PCF #2.

If the second parameter is locally stored in the UE #B, S740 may not be performed.

For a method for obtaining the second parameter by the UE #B, refer to the method 500. For brevity, details are not described herein again.

S750: The UE #A sends a first broadcast message.

The first broadcast message includes the relay service code #1 and the first parameter.

S760: The UE #B sends a response message to the UE #A.

The response message indicates that the UE #B supports accessing, by using the first parameter, the application to be initiated by the UE #A.

The UE #B may determine, based on whether the relay service code #1 is the same as or equivalent to the relay service code #4 and whether the first parameter is the same as or equivalent to the second parameter, whether the UE #B supports accessing, by using the first parameter, the application to be initiated by the UE #A. For a detailed determining method, refer to the method 200. For brevity, details are not described herein again.

S770: The UE #A sends a request message #5 to the UE #B.

The request message #5 requests to establish a PC5 connection to the UE #B.

It should be noted that a sequence of the steps in the method 700 is merely an example, and should not impose a limitation on embodiments of this application. For example, in the method 700, S720 may be performed before S710, or S730 and S740 may be performed before S710 and S720.

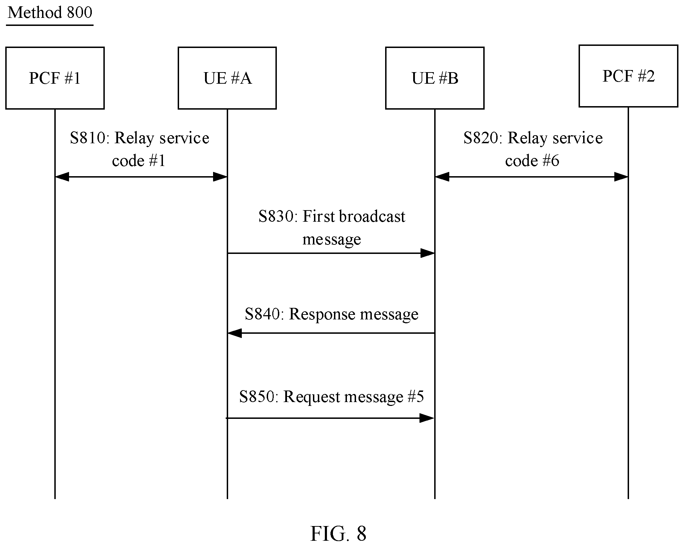

FIG. 8 is a schematic flowchart of a connection establishment method according to an embodiment of this application. As shown in FIG. 8, the method includes S810 to S850. The following describes each step in detail.

S810: The UE #A obtains a relay service code #1 from the PCF #1.

The relay service code #1 does not include information about a first parameter, and the relay service code #1 is associated with an application to be initiated by the UE #A, that is, associated with the UE #A. For a method for obtaining the relay service code #1 by the UE #A, refer to the method 300. For brevity, details are not described herein again.

If the relay service code #1 is locally preconfigured by the UE #A, S810 may not be performed.

S820: The UE #B obtains a relay service code #6 from the PCF #2.

The relay service code #6 is associated with the application to be initiated by the UE #A, that is, associated with the UE #A. For a method for obtaining the relay service code #6 by the UE #B, refer to the method 500. For brevity, details are not described herein again.

S830: The UE #A sends a first broadcast message.

The first broadcast message includes the relay service code #1.

S840: The UE #B sends a response message to the UE #A.

The response message indicates that the UE #B supports accessing, by using the first parameter, the application to be initiated by the UE #A.

The UE #B may determine, based on whether the relay service code #1 is the same as or equivalent to the relay service code #6, whether the UE #B supports accessing, by using the first parameter, the application to be initiated by the UE #A. For a detailed determining method, refer to the method 200. For brevity, details are not described herein again.

S850: The UE #A sends a request message #5 to the UE #B.

The request message #5 requests to establish a PC5 connection to the UE #B.

It should be noted that a sequence of the steps in the method 800 is merely an example, and should not impose a limitation on embodiments of this application. For example, in the method 800, S820 may be performed before S810, or S810 and S830 may be performed before S820.

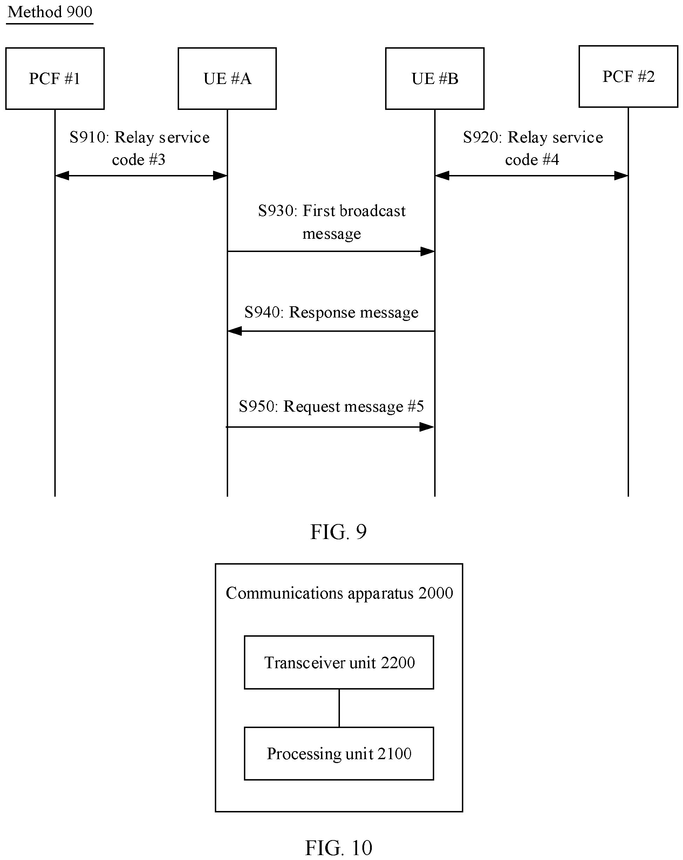

FIG. 9 is a schematic flowchart of a connection establishment method according to an embodiment of this application. As shown in FIG. 9, the method includes S910 to S950. The following describes each step in detail.

S910: The UE #A obtains a relay service code #3 from the PCF #1.

The relay service code #3 is associated with an application of the UE #B that supports a relay service, that is, associated with the UE #B. For a method for obtaining the relay service code #3 by the UE #A, refer to the method 300. For brevity, details are not described herein again.

S920: The UE #B obtains a relay service code #4 from the PCF #2.

The relay service code #4 does not include information about a second parameter, and the relay service code #4 is associated with an application of the UE #B that supports a relay service, that is, associated with the UE #B. For a method for obtaining the relay service code #4 by the UE #A, refer to the method 500. For brevity, details are not described herein again.

If the relay service code #4 is locally preconfigured by the UE #B, S930 may not be performed.

S930: The UE #A sends a first broadcast message.

The first broadcast message includes the relay service code #3.

S940: The UE #B sends a response message to the UE #A.

The response message indicates that the UE #B supports accessing, by using the first parameter, the application to be initiated by the UE #A.

The UE #B may determine, based on whether the relay service code #3 is the same as or equivalent to the relay service code #4, whether the UE #B supports accessing, by using the first parameter, the application to be initiated by the UE #A. For a detailed determining method, refer to the method 200. For brevity, details are not described herein again.

S950: The UE #A sends a request message #5 to the UE #B.

The request message #5 requests to establish a PC5 connection to the UE #B.

It should be noted that a sequence of the steps in the method 900 is merely an example, and should not impose a limitation on embodiments of this application. For example, in the method 900, S920 may be performed before S910, or S910 and S930 may be performed before S920.

The foregoing shows the method for establishing a PC5 connection between the remote UE and the relay UE in the mode B. For a method for establishing a PC5 connection between the remote UE and the relay UE in the mode A, refer to the foregoing method. For brevity, details are not described herein.

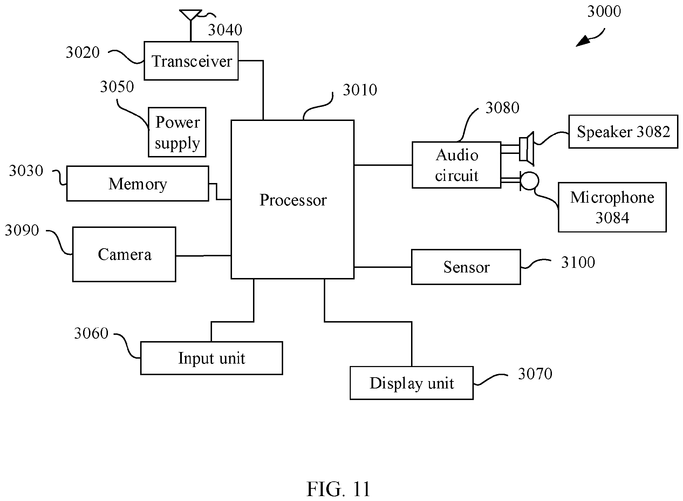

The methods provided in embodiments of this application are described above in detail with reference to FIG. 2 to FIG. 9. The following describes in detail apparatuses according to embodiments of this application with reference to FIG. 10 and FIG. 11.

FIG. 10 is a schematic block diagram of a communications apparatus according to an embodiment of this application. As shown in FIG. 10, the communications apparatus 2000 includes a processing unit 2100 and a transceiver unit 2200.

In a possible design, the communications apparatus 2000 may correspond to the first terminal device in the foregoing method embodiments, for example, may be a first terminal device, or a component (for example, a chip or a chip system) configured in the first terminal device.

It should be understood that the communications apparatus 2000 may correspond to the first terminal device in the method 200, the method 300, the method 400, the method 600, the method 700, the method 800, and the method 900 in embodiments of this application. The communications apparatus 2000 may include units configured to perform the methods performed by the first terminal device in the method 200 in FIG. 2, the method 300 in FIG. 3, the method 400 in FIG. 4, the method 600 in FIG. 6, the method 700 in FIG. 7, the method 800 in FIG. 8, and the method 900 in FIG. 9. In addition, the units in the communications apparatus 2000 and the foregoing other operations and/or functions are intended to implement corresponding procedures in the method 200 in FIG. 2, the method 300 in FIG. 3, the method 400 in FIG. 4, the method 600 in FIG. 6, the method 700 in FIG. 7, the method 800 in FIG. 8, and the method 900 in FIG. 9. It should be understood that a specific process in which the units perform the foregoing corresponding steps has been described in detail in the foregoing method embodiments. For brevity, details are not described herein again.

It should be further understood that, when the communications apparatus 2000 is the first terminal device, the transceiver unit 2200 in the communications apparatus 2000 may be implemented by a transceiver, for example, may correspond to a transceiver 3020 in a terminal device 3000 shown in FIG. 11; and the processing unit 2100 in the communications apparatus 2000 may be implemented by at least one processor, for example, may correspond to a processor 3010 in the terminal device 3000 shown in FIG. 11.

It should be further understood that, when the communications apparatus 2000 is the chip or the chip system configured in the first terminal device, the transceiver unit 2200 in the communications apparatus 2000 may be implemented by an input/output interface; and the processing unit 2100 in the communications apparatus 2000 may be implemented by a processor, a microprocessor, an integrated circuit, or the like integrated into the chip or the chip system.

In another possible design, the communications apparatus 2000 may correspond to the second terminal device in the foregoing method embodiments, for example, may be a second terminal device, or a component (for example, a chip or a chip system) configured in the second terminal device.

It should be understood that the communications apparatus 2000 may correspond to the second terminal device in the method 200, the method 300, the method 500, the method 600, the method 700, the method 800, and the method 900 in embodiments of this application. The communications apparatus 2000 may include units configured to perform the methods performed by the second terminal device in the method 200 in FIG. 2, the method 300 in FIG. 3, the method 500 in FIG. 5, the method 600 in FIG. 6, the method 700 in FIG. 7, the method 800 in FIG. 8, and the method 900 in FIG. 9. In addition, the units in the communications apparatus 2000 and the foregoing other operations and/or functions are intended to implement corresponding procedures in the method 200 in FIG. 2, the method 300 in FIG. 3, the method 500 in FIG. 5, the method 600 in FIG. 6, the method 700 in FIG. 7, the method 800 in FIG. 8, and the method 900 in FIG. 9. It should be understood that a specific process in which the units perform the foregoing corresponding steps has been described in detail in the foregoing method embodiments. For brevity, details are not described herein again.

It should be further understood that, when the communications apparatus 2000 is the second terminal device, the transceiver unit 2200 in the communications apparatus 2000 may be implemented by a transceiver, for example, may correspond to a transceiver 3020 in a terminal device 3000 shown in FIG. 11; and the processing unit 2100 in the communications apparatus 2000 may be implemented by at least one processor, for example, may correspond to a processor 3010 in the terminal device 3000 shown in FIG. 11.

It should be further understood that, when the communications apparatus 2000 is the chip or the chip system configured in the second terminal device, the transceiver unit 2200 in the communications apparatus 2000 may be implemented by an input/output interface; and the processing unit 2100 in the communications apparatus 2000 may be implemented by a processor, a microprocessor, an integrated circuit, or the like integrated into the chip or the chip system.

In another possible design, the communications apparatus 2000 may correspond to the first policy control function network element in the foregoing method embodiments, for example, may be a first policy control function network element, or a component (for example, a chip or a chip system) configured in the first policy control function network element.

It should be understood that the communications apparatus 2000 may correspond to the first policy control function network element in the method 300, the method 600, the method 700, the method 800, and the method 900 in embodiments of this application. The communications apparatus 2000 may include units configured to perform the methods performed by the first policy control function network element in the method 300 in FIG. 3, the method 600 in FIG. 6, the method 700 in FIG. 7, the method 800 in FIG. 8, and the method 900 in FIG. 9. In addition, the units in the communications apparatus 2000 and the foregoing other operations and/or functions are intended to implement corresponding procedures in the method 300 in FIG. 3, the method 600 in FIG. 6, the method 700 in FIG. 7, the method 800 in FIG. 8, and the method 900 in FIG. 9. It should be understood that a specific process in which the units perform the foregoing corresponding steps has been described in detail in the foregoing method embodiments. For brevity, details are not described herein again.

In another possible design, the communications apparatus 2000 may correspond to the second policy control function network element in the foregoing method embodiments, for example, may be a second policy control function network element, or a component (for example, a chip or a chip system) configured in the second policy control function network element.

It should be understood that the communications apparatus 2000 may correspond to the second policy control function network element in the method 500, the method 600, the method 700, the method 800, and the method 900 in embodiments of this application. The communications apparatus 2000 may include units configured to perform the methods performed by the second policy control function network element in the method 500 in FIG. 5, the method 600 in FIG. 6, the method 700 in FIG. 7, the method 800 in FIG. 8, and the method 900 in FIG. 9. In addition, the units in the communications apparatus 2000 and the foregoing other operations and/or functions are intended to implement corresponding procedures in the method 500 in FIG. 5, the method 600 in FIG. 6, the method 700 in FIG. 7, the method 800 in FIG. 8, and the method 900 in FIG. 9. It should be understood that a specific process in which the units perform the foregoing corresponding steps has been described in detail in the foregoing method embodiments. For brevity, details are not described herein again.

FIG. 11 is a schematic diagram of a structure of a terminal device 3000 according to an embodiment of this application. The terminal device 3000 may be used in the system shown in FIG. 1, to implement functions of the terminal device in the foregoing method embodiments. As shown in the figure, the terminal device 3000 includes a processor 3010 and a transceiver 3020. Optionally, the terminal device 3000 further includes a memory 3030. The processor 3010, the transceiver 3002, and the memory 3030 communicate with each other through an internal connection path, to transfer a control signal and/or a data signal. The memory 3030 is configured to store a computer program. The processor 3010 is configured to invoke the computer program from the memory 3030 and run the computer program, to control the transceiver 3020 to receive and send a signal. Optionally, the terminal device 3000 may further include an antenna 3040, configured to send, by using a radio signal, uplink data or uplink control signaling that is output by the transceiver 3020.

The processor 3010 and the memory 3030 may be integrated into one processing apparatus. The processor 3010 is configured to execute program code stored in the memory 3030, to implement the foregoing functions. During specific implementation, the memory 3030 may be integrated into the processor 3010, or may be independent of the processor 3010. The processor 3010 may correspond to the processing unit 2100 in FIG. 10.

The transceiver 3020 may correspond to the transceiver unit 2200 in FIG. 10, and may also be referred to as a transceiver unit. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 3000 shown in FIG. 11 can implement processes related to the first terminal device in the method embodiments shown in FIG. 2, FIG. 3, FIG. 4, and FIG. 6 to FIG. 9. Operations and/or functions of the modules in the terminal device 3000 are intended to implement the corresponding procedures in the foregoing method embodiments. For details, refer to the descriptions in the foregoing method embodiments. To avoid repetition, detailed descriptions are appropriately omitted herein.

The processor 3010 may be configured to perform an action implemented by the first terminal device in the foregoing method embodiments, for example, determine whether a second parameter is the same as or equal to a first parameter. The transceiver 3020 may be configured to perform an action of performing sending by the first terminal device or an action of performing receiving from the second terminal device in the foregoing method embodiments, for example, send a broadcast message and a request message, or receive a response message. For details, refer to the descriptions in the foregoing method embodiments. Details are not described herein again.

It should be further understood that the terminal device 3000 shown in FIG. 11 can implement processes related to the second terminal device in the method embodiments shown in FIG. 2, and FIG. 4 to FIG. 9. Operations and/or functions of the modules in the terminal device 3000 are intended to implement the corresponding procedures in the foregoing method embodiments. For details, refer to the descriptions in the foregoing method embodiments. To avoid repetition, detailed descriptions are appropriately omitted herein.

The processor 3010 may be configured to perform an action implemented by the second terminal device in the foregoing method embodiments, for example, determine whether to provide a relay service of a first application. The transceiver 3020 may be configured to perform an action of performing sending by the second terminal device to the first terminal device or an action of performing receiving from the first terminal device in the foregoing method embodiments, for example, send a broadcast message and a response message, or receive a request message. For details, refer to the descriptions in the foregoing method embodiments. Details are not described herein again.

The terminal device 3000 may further include a power supply 3050, configured to supply power to various components or circuits in the terminal device.

In addition, to improve the functions of the terminal device, the terminal device 3000 may further include one or more of an input unit 3060, a display unit 3070, an audio circuit 3080, a camera 3090, a sensor 3100, and the like, and the audio circuit may further include a speaker 3082, a microphone 3084, and the like.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, the steps in the foregoing methods may be implemented by using an integrated logic circuit of hardware in the processor or by using instructions in a form of software. The steps in the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments can be implemented by using an integrated logical circuit of hardware in the processor, or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that, in embodiments of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory in the system and method described in this specification includes but is not limited to these memories and any memory of another proper type.

According to the methods provided in embodiments of this application, this application further provides a computer program product. The computer program product includes computer program code. When the computer program code is run on a computer, the computer is enabled to perform the methods performed by the first terminal device, the second terminal device, the first policy control function network element, and the second policy control function network element in the embodiments shown in FIG. 2 to FIG. 9.

According to the methods provided in embodiments of this application, this application further provides a computer-readable medium. The computer-readable medium stores computer program code. When the computer program code is run on a computer, the computer is enabled to perform the methods performed by the first terminal device, the second terminal device, the first policy control function network element, and the second policy control function network element in the embodiments shown in FIG. 2 to FIG. 9.

According to the methods provided in embodiments of this application, this application further provides a system. The system includes the foregoing one or more terminal devices and the foregoing one or more policy control function network elements.

The policy control function network element and the terminal device in the foregoing apparatus embodiments may completely correspond to the policy control function network element and the terminal device in the method embodiments. A corresponding module or unit performs a corresponding step. For example, a communications unit (transceiver) performs a receiving or sending step in the method embodiments, and a processing unit (a processor) may perform a step other than the sending or receiving step. For a function of a specific unit, refer to a corresponding method embodiment. There may be one or more processors.

The terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, illustrative logical blocks (illustrative logical blocks) and steps (steps) described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for a detailed working process of the foregoing system, apparatus, and unit, refer to a corresponding process in the foregoing method embodiments. Details are not described again herein.

In the several embodiments provided in this application, it should be understood that the disclosed system, the apparatus, and the method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

In the foregoing embodiments, all or some of the functions of the function units may be implemented by using software, hardware, firmware, or any combination thereof. When software is used to implement embodiments, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

When the functions are implemented in a form of a software functional unit and sold or used as an independent product, the functions may be stored in the computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be, for example, a personal computer, a server, or a network device) to perform all or some of the steps in the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A connection establishment method, comprising:
sending, by a first terminal device, a first broadcast message, wherein the first broadcast message comprises a first relay service code, the first relay service code comprises information about a first parameter, the first parameter is a parameter for accessing a first application, and the first application is an application to be initiated by the first terminal device; and
receiving, by the first terminal device, a response message from a second terminal device, wherein the response message indicates that the second terminal device supports accessing the first application by using the first parameter.

2. The method according to claim 1, wherein the first parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

3. The method according to claim 1 or 2, wherein the first relay service code is associated with the first application.

4. The method according to claim 1 or 2, wherein the first relay service code is associated with a second application, and the second application is an application of a relay service that is supported by the second terminal device.

5. The method according to any one of claims 1 to 4, wherein the method further comprises:
sending, by the first terminal device, a first request message to a first policy control function PCF network element via an access and mobility management function AMF network element, wherein the first request message requests to obtain the first relay service code; and
receiving, by the first terminal device, the first relay service code from the first PCF network element.

6. The method according to claim 5, wherein the first request message comprises the following information: identification information of the first terminal device, a request type, and an identifier of the first application.

7. The method according to claim 6, wherein the first request message further comprises downgrade indication information, and the downgrade indication information indicates whether the first terminal device accepts service downgrade.

8. A connection establishment method, comprising:
receiving, by a second terminal device, a first broadcast message, wherein the first broadcast message comprises a first relay service code, the first relay service code comprises information about a first parameter, the first parameter is a parameter for accessing a first application, and the first application is an application to be initiated by a first terminal device; and
sending, by the second terminal device, a response message to the first terminal device, wherein the response message indicates that the second terminal device supports accessing the first application by using the first parameter.

9. The method according to claim 8, wherein the first parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

10. The method according to claim 8 or 9, wherein before the sending, by the second terminal device, a response message to the first terminal device, the method further comprises:
determining, by the second terminal device, whether the second terminal device supports accessing the first application by using the first parameter.

11. The method according to claim 8 or 9, wherein the first relay service code is associated with the first application; and
the method further comprises:
determining, by the second terminal device based on whether the first relay service code is the same as or equivalent to a second relay service code, whether the second terminal device supports the first application by using the first parameter, wherein the second relay service code is associated with the first application or a second application, the second application is an application of a relay service that is supported by the second terminal device, and the second relay service code is a relay service code stored in the second terminal device.

12. The method according to claim 8 or 9, wherein the first relay service code is associated with a second application, and the second application is an application of a relay service that is supported by the second terminal device; and
the method further comprises:
determining, by the second terminal device based on whether the first relay service code is the same as or equivalent to a second relay service code, whether the second terminal device supports the first application by using the first parameter, wherein the second relay service code is associated with the second application, and the second relay service code is a relay service code stored in the second terminal device.

13. A method for obtaining a relay service code, comprising:
receiving, by a first policy control function PCF network element, a first request message from a first terminal device, wherein the first request message requests to obtain a first relay service code, the first relay service code comprises information about a first parameter, the first parameter is a parameter for accessing a first application, and the first application is an application to be initiated by the first terminal device;
determining, by the first PCF network element, the first relay service code based on the first parameter; and
sending, by the first PCF network element, the first relay service code to the first terminal device via an access and mobility management function AMF network element.

14. The method according to claim 13, wherein the first parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

15. The method according to claim 13 or 14, wherein the first relay service code is associated with the first application; and
the determining, by the first PCF network element, the first relay service code based on the first parameter comprises:
determining, by the first PCF network element, the first relay service code based on the first parameter and the following information:
subscription information of the first terminal device and an identifier of the first application.

16. The method according to claim 13 or 14, wherein the first relay service code is associated with the first application; and
the determining, by the first PCF network element, the first relay service code based on the first parameter comprises:
determining, by the first PCF network element, the first relay service code based on the first parameter and the following information:
subscription information of the first terminal device, an identifier of the first application, and downgrade indication information, wherein the downgrade indication information indicates whether the first terminal device accepts service downgrade.

17. The method according to claim 13 or 14, wherein the first relay service code is associated with a second application, and the second application is an application of the terminal device that supports a relay service; and
the determining, by the first PCF network element, the first relay service code based on the first parameter comprises:
sending, by the first PCF network element, a second request message to a second PCF network element, wherein the second request message requests to obtain a second relay service code, the second relay service code is associated with the second application, and the second request message comprises the first parameter and an identifier of the first application;
receiving, by the first PCF network element, the second relay service code from the second PCF network element; and
determining, by the first PCF network element, the first relay service code based on the second relay service code.

18. The method according to claim 17, wherein the method further comprises:
sending, by the first PCF network element, a third request message to a unified data repository UDR network element, wherein the third request message requests to obtain information about the second PCF network element; and
receiving, by the first PCF network element, the information about the second PCF network element from the UDR network element.

19. The method according to any one of claims 13 to 18, wherein the first request message comprises the following information: identification information of the first terminal device, a request type, and the identifier of the first application.

20. The method according to claim 19, wherein the first request message further comprises the downgrade indication information, and the downgrade indication information indicates whether the first terminal device accepts service downgrade.

21. A connection establishment method, comprising:
sending, by a second terminal device, a second broadcast message, wherein the second broadcast message comprises a second relay service code, the second relay service code comprises information about a second parameter, the second parameter is a parameter for accessing a second application, and the second application is an application of a relay service that is supported by the second terminal device; and
receiving, by the second terminal device, a fourth request message from a first terminal device, wherein the fourth request message requests to establish a PC5 connection to the second terminal device.

22. The method according to claim 21, wherein the second parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

23. The method according to claim 21 or 22, wherein the second relay service code is associated with the second application.

24. The method according to claim 21 or 22, wherein the second relay service code is associated with a first application, and the first application is an application to be initiated by the first terminal device.

25. The method according to any one of claims 21 to 24, wherein the method further comprises:
sending, by the second terminal device, a fifth request message to a second policy control function PCF network element via an access and mobility management function AMF network element, wherein the fifth request message requests to obtain the second relay service code; and
receiving, by the second terminal device, the second relay service code from the second PCF network element.

26. The method according to claim 25, wherein the fifth request message comprises the following information: identification information of the second terminal device, a request type, and an identifier of the second application.

27. A connection establishment method, comprising:
receiving, by a first terminal device, a second broadcast message, wherein the second broadcast message comprises a second relay service code, the second relay service code comprises information about a second parameter, the second parameter is a parameter for accessing a second application, and the second application is an application of a relay service that is supported by a second terminal device; and
sending, by the first terminal device, a fourth request message to the second terminal device, wherein the fourth request message requests to establish a PC5 connection to the second terminal device.

28. The method according to claim 27, wherein the second parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

29. The method according to claim 27 or 28, wherein before the sending, by the first terminal device, a fourth request message to the second terminal device, the method further comprises:
determining, by the first terminal device, whether the second terminal device supports accessing a first application by using a first parameter, wherein the first application is an application to be initiated by the first terminal device, and the first parameter is a parameter for accessing the first application.

30. The method according to claim 27 or 28, wherein the second relay service code is associated with the second application; and
the method further comprises:
determining, by the first terminal device based on whether the second relay service code is the same as or equivalent to a first relay service code, whether the second terminal device supports accessing the second application by using a first parameter, wherein the first relay service code is a relay service code stored in the first terminal device, the first relay service code is associated with the second application or a first application, the first application is an application to be initiated by the first terminal device, and the first parameter is a parameter for accessing the first application.

31. The method according to claim 27 or 28, wherein the second relay service code is associated with a first application, and the first application is an application to be initiated by the first terminal device; and
the method further comprises:
determining, by the first terminal device based on whether the second relay service code is the same as or equivalent to a first relay service code, whether the second terminal device supports accessing the first application by using a first parameter, wherein the first relay service code is a relay service code stored in the first terminal device, the second relay service code is associated with the first application, and the first parameter is a parameter for accessing the first application.

32. The method according to any one of claims 29 to 31, wherein the first parameter comprises one or more of the following parameters: a DNN, S-NASSI, an SSC mode, a PDU session type, an access mode priority, and a non-3GPP offloading indication.

33. A method for obtaining a relay service code, comprising:
receiving, by a second policy control function PCF network element, a fifth request message from a second terminal device, wherein the fifth request message requests to obtain a second relay service code, the second relay service code comprises information about a second parameter, the second parameter is a parameter for accessing a second application, and the second application is an application of a relay service that is supported by the second terminal device;
determining, by the second PCF network element, the second relay service code based on the second parameter; and
sending, by the second PCF network element, the second relay service code to the second terminal device via an access and mobility management function AMF network element.

34. The method according to claim 33, wherein the second parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

35. The method according to claim 33 or 34, wherein the second relay service code is associated with the second application; and
the determining, by the second PCF network element, the second relay service code based on the second parameter comprises: determining, by the second PCF network element, the second relay service code based on the second parameter and the following information:
subscription information of the second terminal device and an identifier of the second application.

36. The method according to claim 33 or 34, wherein the second relay service code is associated with a first application, and the first application is an application to be initiated by a first terminal device; and
the determining, by the second PCF network element, the second relay service code based on the second parameter comprises:
sending, by the second PCF network element, a sixth request message to a first PCF network element, wherein the sixth request message requests to obtain a first relay service code, the first relay service code is associated with the first application, and the sixth request message comprises the second parameter and an identifier of the second application;
receiving, by the second PCF network element, the first relay service code from the first PCF network element; and
determining, by the second PCF network element, the second relay service code based on the first relay service code.

37. The method according to claim 36, wherein the method further comprises:
sending, by the second PCF network element, a seventh request message to a unified data repository UDR network element, wherein the seventh request message requests to obtain information about the first PCF; and
receiving, by the second PCF network element, the information about the first PCF from the UDR network element.

38. The method according to any one of claims 33 to 37, wherein the fifth request message comprises the following information:
identification information of the second terminal device, a request type, and the identifier of the second application.

39. A connection establishment method, comprising:
sending, by a first terminal device, a first broadcast message, wherein the first broadcast message comprises a third relay service code and a first parameter, the first parameter is a parameter for accessing a first application, and the first application is an application to be initiated by the first terminal device; and
receiving, by the first terminal device, a response message from a second terminal device, wherein the response message indicates that the second terminal device supports accessing the first application by using the first parameter.

40. The method according to claim 39, wherein the first parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

41. A connection establishment method, comprising:
sending, by a second terminal device, a second broadcast message, wherein the second broadcast message comprises a second relay service code and a second parameter, the second parameter is a parameter for accessing a second application, and the second application is an application of a relay service that is supported by the second terminal device; and
receiving, by the second terminal device, a request message from a first terminal device, wherein the request message requests to establish a PC5 connection to the second terminal device.

42. The method according to claim 41, wherein the second parameter comprises one or more of the following parameters: a data network name DNN, single-network slice selection assistance information S-NASSI, a session and service continuity SSC mode, a protocol data unit PDU session type, an access mode priority, and a non-3rd Generation Partnership Project 3GPP offloading indication.

43. A communications apparatus, comprising units configured to implement the method according to any one of claims 1 to 42.

44. A communications apparatus, comprising:
a processor, configured to execute computer instructions stored in a memory, to enable the apparatus to perform the method according to any one of claims 1 to 42.

45. A computer-readable storage medium, wherein the computer-readable storage medium stores a computer program, and when the computer program is executed, the method according to any one of claims 1 to 42 is performed.
